(19) Europäisches Patentamt
European Patent Office
Office européen des brevets

(11) EP 3 741 646 A1

(12) **EUROPÄISCHE PATENTANMELDUNG**

(43) Veröffentlichungstag:
25.11.2020 Patentblatt 2020/48

(51) Int Cl.:
B62B 1/04 (2006.01)     B62B 5/06 (2006.01)

(21) Anmeldenummer: 20175485.0

(22) Anmeldetag: 19.05.2020

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(30) Priorität: 23.05.2019 DE 102019113809

(71) Anmelder: Gruber, Georg
85445 Oberding-Aufkirchen (DE)

(72) Erfinder: Gruber, Georg
85445 Oberding-Aufkirchen (DE)

(74) Vertreter: Bobbert & Partner
Patentanwälte PartmbB
Postfach 1252
85422 Erding (DE)

(54) **TRANSPORTROLLER**

(57) Die vorliegende Erfindung betrifft einen Transportroller (100) zum, insbesondere manuellen, Bewegen und/oder Transportieren von wenigstens einem Gegenstand (200, 201). Der Transportroller (100) umfasst eine Auflageplatte (3) oder eine Aufnahmeeinheit (500) zum Aufsetzen oder Aufnehmen des Gegenstands (200, 201) hierauf oder hierin und wenigstens oder genau zwei Rollen (5), die unterhalb der Auflageplatte (3) oder der Aufnahmeeinheit (500) angeordnet sind. Ferner umfasst der Transportroller (100) wenigstens einen Stützfuß (7), der unterhalb der Auflageplatte (3) oder der Aufnahmeeinheit (500) angeordnet ist, wobei der Stützfuß (7) und die Rollen (5) jeweils zum Abstützen des Transportrollers (100) auf einem Untergrund (300) angeordnet und/oder ausgebildet sind, sowie eine mit der Auflageplatte (3) oder der Aufnahmeeinheit (500) lösbar mittels eines Verbindungselements (13) verbundenen Deichsel (1) zum Kippen und, insbesondere manuellen, rollenden Bewegen des Transportrollers (100), wobei ein Kipppunkt (27) zum Kippen vorzugsweise unterhalb des Gegenstands (200, 201) oder unter der Auflageplatte (3) oder unter der Aufnahmeeinheit (500) liegt.

Fig. 3b

EP 3 741 646 A1

**Beschreibung**

Die vorliegende Erfindung betrifft einen Transportroller gemäß Anspruch 1, eine Deichsel gemäß Anspruch 8 sowie ein Set gemäß Anspruch 9.

Transportroller sind aus dem Stand der Technik in unterschiedlichen Ausführungsformen und für unterschiedliche Einsatzzwecke bekannt. Transportroller gibt es beispielsweise zum Transportieren von Möbel, Pflanzen, Stapelbehältern, Kästen, Körben oder anderem Transportgut. Transportroller weisen zumeist vier Rollen, eine Auflagefläche und ein Gestänge oder eine Deichsel zum manuellen Schieben oder Ziehen des Transportrollers auf.

Eine Aufgabe der vorliegenden Erfindung ist es, einen weiteren Transportroller, eine Deichsel für einen Transportroller und ein Set anzugeben.

Die erfindungsgemäße Aufgabe kann durch einen Transportroller mit den Merkmalen des Anspruchs 1 gelöst werden, ferner durch eine Deichsel mit den Merkmalen des Anspruchs 8 sowie durch ein Set mit den Merkmalen des Anspruchs 9.

Hierzu schlägt die vorliegende Erfindung einen Transportroller zum, insbesondere manuellen, Bewegen und/oder Transportieren eines Gegenstands vor. Der Gegenstand kann ein Gefäß, ein Pflanzenkübel, eine Pflanze in einem Gefäß, Pflanzenerde in einem Gefäß, ein Möbelstück, eine Kiste oder dergleichen sein.

Der Transportroller umfasst eine Auflageplatte zum Aufsetzen des Gegenstands oder eine Aufnahmeeinheit zum Aufnehmen des Gegenstands hierauf bzw. hierin. Die Auflageplatte kann optional eine Grundplatte oder eine Auflagevorrichtung sein oder als eine solche bezeichnet werden. Ein Aufsetzen kann z. B. ein Auflegen oder ein Positionieren sein. Die Aufnahmeeinheit kann ein Behältnis, ein Topf, ein Gefäß oder Ähnliches sein. Ein Aufnehmen kann ein Befüllen mit einem Material sein. Das Material kann beispielsweise Pflanzenerde, Blumenerde, eine oder mehrere Pflanzen oder etwas anderes sein.

Weiterhin umfasst der Transportroller wenigstens eine Rolle, wenigstens zwei oder genau zwei Rollen, jeweils mit wenigstens einer Drehachse. Die Rolle(n) und ihre Drehachse(n) oder eine durch diese Drehachse(n) hindurch und entlang der Drehachse(n) verlaufende Gerade sind unter oder unterhalb der Auflageplatte oder unter oder unterhalb der Aufnahmeeinheit angeordnet, insbesondere vollständig. Die Anordnung der Rollen kann eine Befestigung, eine Verbindung der Rollen unter oder unterhalb der Auflageplatte mit der Auflageplatte oder der Aufnahmeeinheit sein oder umfassen. Die Rollen können Laufrollen oder Bockrollen sein oder als solche bezeichnet werden.

Optional umfasst der Transportroller weiterhin wenigstens einen Stützfuß, der unterhalb der Auflageplatte oder der Aufnahmeeinheit angeordnet ist, wobei der Stützfuß oder die Stützfüße sowie die Rollen jeweils zum Abstützen des ruhenden Transportrollers auf einem Untergrund angeordnet und/oder ausgebildet sind.

Die Auflageplatte oder die Aufnahmeeinheit weisen einen Aufnahmeabschnitt zum Einschieben oder Hindurchschieben eines Verbindungselements einer Deichsel auf. Der Aufnahmeabschnitt dient zum, insbesondere formschlüssigen, Verbinden des Transportrollers, insbesondere dessen Auflageplatte oder Aufnahmeeinheit, mit der Deichsel oder einem Abschnitt hiervon.

Die erfindungsgemäße Deichsel ist zu ihrem Verbinden mit einem Transportroller, insbesondere mit einem erfindungsgemäßen Transportroller, geeignet und/oder ausgestaltet. Die Deichsel weist wenigstens einen ersten Endbereich zu ihrem Verbinden mit der Auflageplatte, einen zweiten Endbereich zum Aufbringen einer Kraft durch einen Nutzer zum Bewegen und/oder zum Führen des Transportrollers sowie einen mittleren Verbindungsbereich auf. Der mittlere Verbindungsbereich ist zwischen dem ersten Endbereich und dem zweiten Endbereich angeordnet.

Der erste und zweite Endbereich sowie der mittlere Verbindungsbereich können separate Teile sein, die miteinander lösbar oder unlösbar, da z. B. integral gefertigt, verbunden sind. Die Verbindungselemente können materialschlüssige Verbindungen sein oder aufweisen, beispielsweise Lötverbindungen, Schweißverbindungen oder Klebeverbindungen, und/oder kraftschlüssige Verbindungen und/oder formschlüssige Verbindungen. Die Verbindungselemente können lösbare Verbindungen sein oder aufweisen, beispielsweise Schraubverbindungen. Alternativ können die drei Bereiche, also der erste und zweite Endbereich sowie der mittlere Verbindungsbereich, einstückig sein, beispielsweise in Form eines gebogenen Rohrs.

Das erfindungsgemäße Set weist wenigstens einen erfindungsgemäßen Transportroller und wenigstens eine erfindungsgemäße Deichsel auf.

Erfindungsgemäße Ausführungsformen können eines oder mehrere der oben und/oder im Folgenden genannten Merkmale in beliebiger Kombination aufweisen, sofern für den Fachmann die konkrete Ausführungsform nicht als technisch unmöglich erkennbar ist.

Bei allen folgenden Ausführungen ist der Gebrauch des Ausdrucks "kann sein" bzw. "kann haben" usw. synonym zu "ist vorzugsweise" bzw. "hat vorzugsweise" usw. zu verstehen und soll eine erfindungsgemäße Ausführungsform erläutern.

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann daher beispielsweise bei der Angabe "ein" oder "einem" stets "wenigstens ein" oder "wenigstens einem" mit. Dieses Verständnis ist ebenso von der vorliegenden Erfindung mit umfasst wie die Auslegung, dass ein Zahlenwort wie beispielsweise "ein" alternativ als "genau ein" gemeint sein kann, wo immer dies für den Fachmann erkennbar technisch möglich ist. Beides ist von der vorliegenden Erfindung umfasst und gilt für alle hierin verwendeten Zahlenworte.

Vorteilhafte Weiterentwicklungen der vorliegenden Erfindung sind jeweils Gegenstand von Unteransprüchen und Ausführungsformen.

Wenn hierin von einer Ausführungsform die Rede ist, so stellt dies eine erfindungsgemäße, beispielhafte Ausführungsform dar.

Wenn hierin offenbart ist, dass der erfindungsgemäße Gegenstand ein oder mehrere Merkmale in einer bestimmten Ausführungsform aufweist, so ist hierin jeweils auch offenbart, dass der erfindungsgemäße Gegenstand genau dieses oder diese Merkmale in anderen, ebenfalls erfindungsgemäßen Ausführungsformen ausdrücklich nicht aufweist, z. B. im Sinne eines Disclaimers. Für jede hierin genannte Ausführungsform gilt somit, dass die gegenteilige Ausführungsform, beispielsweise als Negation formuliert, ebenfalls offenbart ist.

Erfindungsgemäße Ausführungsformen können eines oder mehrere der oben und/oder im Folgenden genannten Merkmale in jeder beliebigen, technisch möglichen Kombination aufweisen.

Wenn hierin davon die Rede ist, dass eine erste Komponente "unter" einer zweiten Komponenten angeordnet ist, so kann dies in manchen Ausführungsformen bedeuten, dass die zweite Komponente der ersten von oben aufliegt, direkt oder indirekt, oder die erste mit Blick von oben verdeckt oder in Blickrichtung von oben vor oder über der ersten angeordnet ist.

Wenn hierin davon die Rede ist, dass eine erste Komponente "unterhalb" einer zweiten Komponenten angeordnet ist, so kann dies in manchen Ausführungsformen bedeuten, dass die erste Komponente auf einem niedrigerem Niveau oder einen geringeren Höhe, z. B. bezogen auf einen Untergrund, als die zweite angeordnet ist.

In einigen Ausführungsformen ist eine Anordnung einer oder mehrerer Komponenten, beispielsweise der Rollen und/oder des Stützfußes, unterhalb der Auflageplatte (oder der Aufnahmeeinheit oder der Auflagevorrichtung) so zu verstehen, dass die wenigstens eine Komponente genau unterhalb der Auflageplatte angeordnet ist. Bei einer Aufsicht von oben ist die derart angeordnete Komponente unterhalb der Auflageplatte oder einer Projektionsfläche der Auflageplatte angeordnet und durch diese bei einem Blick von oben vorzugsweise verdeckt. Die derart angeordnete Komponente ragt in dieser Ausführungsform nicht, auch nicht abschnittsweise, über diese Projektionsfläche hinaus. Rollen stehen in solchen Ausführungsformen in einer seitlichen Richtung, also z. B. in einer Richtung parallel zu einer Aufstellfläche (Boden) oder zur Auflageplatte nicht über Letztere über oder vor.

In einigen Ausführungsformen ist eine Anordnung einer Komponente unterhalb der Auflageplatte, beispielsweise der Rollen und/oder des Stützfußes, so zu verstehen, dass die Komponente teilweise bzw. abschnittsweise unterhalb der Auflageplatte angeordnet ist. Bei einer Aufsicht von oben ist die Anordnung unterhalb einer Projektionsfläche der Auflageplatte angeordnet. Die Anordnung ragt in dieser Ausführungsform zum Teil bzw. abschnittsweise über diese Projektionsfläche hinaus.

Der Transportroller kann eine geeignete Vorrichtung sein, um das Transportgut von einem ersten Stellplatz zu einem zweiten Stellplatz zu transportieren, zu bewegen oder zu verschieben.

Das Transportieren kann als Verstellen, als Verrücken oder als Verschieben bezeichnet werden. Der Transportweg kann weniger als 1 m, mehrere Meter oder weitere Entfernungen betragen. Rein exemplarisch kann das Transportgut ein schwerer Pflanzenkübel oder ein Großblumentopf sein, der beispielsweise zwischen 50 und 100 kg wiegt. Weiterhin kann es notwendig sein, beispielsweise bedingt durch einen Jahreszeitenwechsel vom Sommer zum Herbst, eine Pflanze mit dem Pflanzenkübel von einem ersten Stellplatz zu einem zweiten Stellplatz zu verschieben. Dabei ist es vorteilhaft möglich, den schweren Pflanzenkübel ständig auf der Auflageplatte oder in der Aufnahmeeinheit des Transportrollers zu belassen und nur für einen Standortwechsel bzw. einen Stellplatzwechsel eine lösbare Deichsel mit der Auflageplatte zu verbinden, um den Pflanzenkübel gemeinsam mit der Auflageplatte zu verschieben. Anschließend kann die Deichsel wieder gelöst und an einem geeigneten Ort aufbewahrt werden.

In manchen Ausführungsformen ist der Aufnahmeabschnitt zumindest abschnittsweise unter der Auflageplatte und/oder innerhalb einer unteren Wandung der Auflageplatte oder der Aufnahmeeinheit angeordnet. Alternativ oder ergänzend erstreckt er sich, zumindest abschnittsweise, dorthin.

In einigen Ausführungsformen kann der Aufnahmeabschnitt aus einer Durchgangsöffnung durch eine Wandung, insbesondere eine Wandung zur Begrenzung oder zum seitlichen Abschluss von Aufnahmeabschnitt oder Aufnahmeeinheit, bestehen oder eine solche umfassen.

In einigen Ausführungsformen schließt sich eine Wandung, z. B. die untere Wandung, mittelbar oder unmittelbar an die Auflageplatte, oder die Aufnahmeeinheit, nach (im Gebrauchszustand) unten hin (vorzugweise senkrecht oder im Wesentlichen senkrecht zur Haupterstreckungsebene der Auflageplatte). Die Wandung kann dabei vorzugweise einen Abschnitt der Rollen in einer Seitenansicht des Transportrollers bedecken, was optisch als angenehm empfunden werden kann, oder den größten Teil des Anblicks der Rollen von ihrer Seite. Die Wandung kann sich über den gesamten Umfang des Transportrollers oder der Auflageplatte erstrecken, alternativ nur über einen Teil hiervon. Optional kann die Wandung entlang des Umfangs von Transportroller oder Auflageplatte eine sich verändernde Höhe aufweisen.

Letzteres kann die Nutzung z. B. des Aufnahmeabschnitts des Transportrollers begünstigen und/oder ein Kippen des Transportrollers unter Einsatz seiner Deichsel in stärkerem Maße ermöglichen.

Die Auflageplatte kann als Grundplatte, Auflagevorrichtung oder Podest bezeichnet werden. Die Auflageplatte kann quadratisch, rechteckförmig, rund, oval oder eine andere Form aufweisen. Die Auflageplatte kann aus Holz, Metall, Kunststoff oder einem Verbundmaterial hergestellt sein oder ein solches Material aufweisen. Weiterhin kann die Auflageplatte einteilig oder mehrteilig sein. Die Auflageplatte kann massiv hergestellt sein oder einen oder mehrere Hohlräume und/oder Durchgangsöffnungen aufweisen. Die Auflageplatte kann eine innere Verstärkungsstruktur aufweisen, um beispielsweise in einer Leichtbauweise ein geringes Gewicht in Kombination mit einer hohen Stabilität aufzuweisen.

Die Auflageplatte schließt den Transportroller - bei nicht eingesteckter Deichsel - in manchen Ausführungsformen nach oben ab.

Die Auflageplatte schließt den Transportroller - bei nicht eingesteckter Deichsel - in einigen Ausführungsformen bis einschließlich dessen seitlichen Ränder eben, d. h. als Fläche, ab. Der Transportroller ist (ohne Deichsel) somit an seiner oberen Fläche eben. Erhebungen, die sich über die Ebene der Auflageplatte hinaus nach oben erstrecken, hat er in diesen Ausführungsformen nicht.

Handgriffe weist der Transportroller in manchen Ausführungsformen zusätzlich zur Deichsel nicht auf.

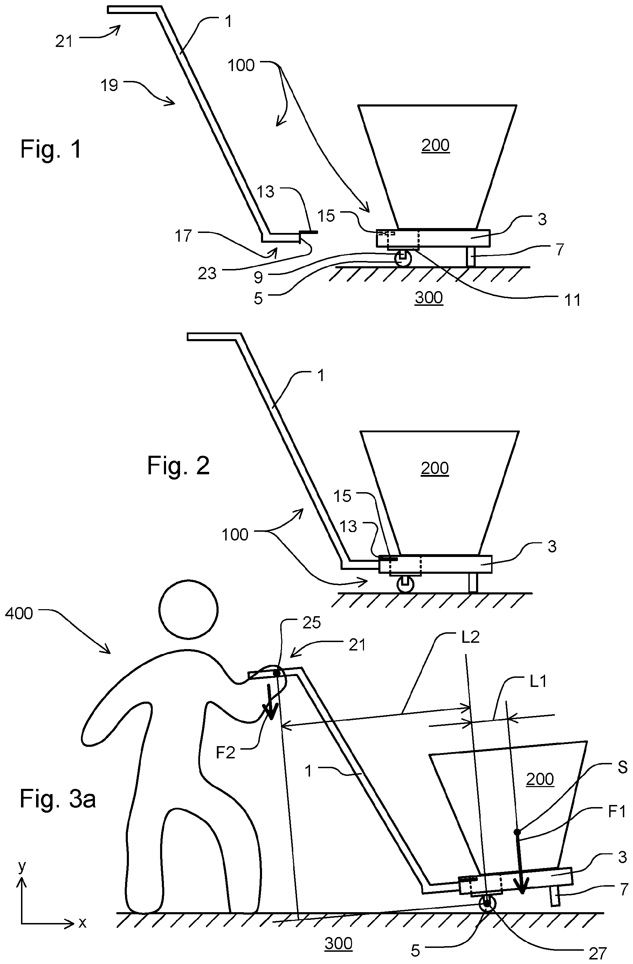

Der oberen Abschluss der Rollen des Transportrollers stehen in einigen Ausführungsformen nicht über einer obere Fläche der Auflageplatte über, in manchen Ausführungsformen enden die Rollen (von einer Aufstellfläche für den Transportroller wie dem Fußboden aus betrachtet) oder ihre obersten (bezogen z. B. auf Fig. 1) unterhalb der Auflageplatte.

Die Auflageplatte weist in einigen Ausführungsformen keine Gitterstruktur mit Streben z. B. aus Metall auf, wobei die einzelnen Streben der Gitterstruktur beispielsweise miteinander verlötet oder verschweißt sein können.

In gewissen Ausführungsformen sind die Rollen unmittelbar an der Unterseite der Auflageplatte und/oder unter dieser befestigt. Die Rollen können in jeweils einer Achsaufhängung befestigt sein. Die Achsaufhängung kann mit der Auflageplatte lösbar oder nicht-lösbar verbunden sein. Die Achsaufhängung kann an der Auflageplatte angeschraubt, genietet, gelötet, geschweißt oder anders befestigt sein. Die Achsaufhängung kann integral, also einstückig, mit der Auflageplatte ausgeführt sein, beispielsweise als faserverstärktes Kunststoffteil. Die Rollen können beispielsweise Lager, z. B. Wälzlager oder Gleitlager, aufweisen. Die Rollen können als Laufrollen bezeichnet werden.

In manchen Ausführungsformen ist der Stützfuß an der Unterseite der Auflageplatte befestigt. Der Stützfuß kann angeschraubt, gelötet, geklebt, geschweißt oder in einer anderen Art und Weise mit der Auflageplatte verbunden sein.

Der Stützfuß kann in eine Sacklochbohrung, in eine Durchgangsbohrung oder in eine Vertiefung der Auflageplatte eingeführt und anschließend fixiert bzw. befestigt werden.

Der Stützfuß kann rohrförmig ausgebildet sein und einen runden oder quadratischen Querschnitt aufweisen.

Der Stützfuß kann einen endseitigen Aufsatz aufweisen, beispielsweise um eine größere Fläche für einen Untergrund bereitzustellen und/oder eine verbesserte Haftreibung zu erzielen. Der Aufsatz kann ein Kunststofffuß zum Aufstecken auf den Stützfuß sein. Der Stützfuß kann integral, also einstückig, mit der Auflageplatte ausgeführt sein, beispielsweise als faserverstärktes Kunststoffteil.

In einigen Ausführungsformen umfasst der Transportroller eine mit der Auflageplatte oder der Aufnahmeeinheit mittels eines Verbindungselements lösbar verbundene oder verbindbare Deichsel zum Kippen und, insbesondere manuellen, rollenden Bewegen des Transportrollers oder ist hiermit, vorzugsweise lösbar, verbunden. Das Verbindungselement der Deichsel kann entlang eines Einschiebewegs in oder unter die Auflageplatte oder Aufnahmeeinheit eingeschoben und somit verbunden werden. Der Einschiebeweg kann parallel zu der Auflageplatte angeordnet sein.

Die Deichsel kann in manchen Ausführungsformen als Griffstange bezeichnet werden. Die Griffstange kann an einem Ende beispielsweise mit einer Hand gegriffen und geführt werden, um den Transportroller zu kippen und manuell zu bewegen. Die Bewegung kann ein Rollen, ein Schieben, ein Ziehen oder ein anderes Bewegen des Transportrollers sein. Mittels der Griffstange kann eine Schubkraft oder eine Zugkraft auf den Transportroller ausgeübt werden. Mittels der Deichsel kann der Transportroller geschoben, gezogen, gedreht, gekippt, angehoben, geführt oder allgemein bewegt werden. Die Deichsel kann eine Schubstange oder Zugstange zum manuellen Bewegen des Transportrollers sein oder als solche bezeichnet werden.

Die Deichsel kann in einigen Ausführungsformen randseitig am Umfang mit der Auflageplatte verbunden werden. Beispielsweise kann die Deichsel mittels einer Steckverbindung von der Seite in eine Vertiefung, z. B. eine formschlüssige Sacklochbohrung, in die Auflageplatte eingeschoben werden. Die Verbindung kann reibschlüssig sein. Die Verbindung kann eine mechanische Sicherung aufweisen, beispielsweise einen Sicherungsstift, der die Deichsel an der Auflageplatte gegen ein ungewolltes Entkoppeln sichert. Die mechanische Sicherung kann ein Steckbolzen mit einer Kugelsicherung, ein Sicherungssplint, ein Federsplint oder ähnliches sein oder aufweisen. Die mechanische Sicherung kann insbesondere ausgestaltet sein, um manuell einfach gelöst zu werden.

Die Deichsel kann dazu ausgestaltet und vorgesehen sein, den Transportroller zu seinem Kippen um den Kipppunkt und seinem anschließenden Bewegen mittels zweier Rollen und einer an der Deichsel angreifbaren Kraft, insbesondere einer Handkraft als Schubkraft oder Zugkraft, zu bewegen.

Der Kipppunkt kann in einigen Ausführungsformen auf einer Verbindungslinie zwischen den beiden Drehachsen der beiden Rollen angeordnet sein oder in einer Vereinfachung dort angenommen werden.

In manchen Ausführungsformen liegt der Kipppunkt zum Kippen des Transportrollers unterhalb des Gegenstands und/oder unter der Auflageplatte oder der Aufnahmeeinheit des Transportrollers.

Der Kipppunkt kann als Drehpunkt bezeichnet werden, um den der Transportroller mittels einer an der Deichsel angreifenden Kraft gedreht bzw. gekippt wird. Die Höhe der angreifenden Kraft und die Richtung des Kraftvektors können nach dem Hebelgesetz und den angreifenden Drehmomenten bestimmt werden. Das notwendige Mindestdrehmoment zum Kippen um den Kipppunkt kann durch die an einem Schwerpunkt des Gewichts des Transportrollers und einem optional darauf zu transportierenden Gegenstand angreifende Kraft und dem Hebelarm des außerhalb des Kipppunkts angreifenden Kraftvektors bestimmt werden. Der Hebelarm entspricht der Länge bzw. dem Abstand der Senkrechten des Kraftvektors zum Kipppunkt. Dieses notwendige Mindestdrehmoment muss durch ein Drehmoment überwunden werden, das durch eine an der Deichsel angreifende Kraft und den Hebelarm der Senkrechten dieses angreifenden Kraftvektors zum Kipppunkt aufgebracht werden muss. Umso größer dieser Hebelarm ist, umso kleiner ist die notwendige und aufzubringende Höhe der angreifenden Kraft. Wenn diese Kraft eine manuell aufzubringende Handkraft an der Deichsel ist, kann diese Kraft beispielsweise durch die Deichselgeometrie, die Deichsellänge und die Angriffsrichtung der Handkraft am Deichselgriff optimiert werden. In den Ausführungsbeispielen der Figuren werden diese Drehmomente um den Kipppunkt exemplarisch dargestellt.

Im Folgenden kann die Formulierung "Auflageplatte zum Aufsetzen des Gegenstands" gleichfalls die Formulierung "Aufnahmeeinheit zum Aufnehmen des Gegenstands" umfassen. Dies umfasst auch sinngemäß ähnliche Formulierungen. Beispielsweise können alle offenbarten Ausführungsformen mit einer Auflageplatte auch Ausführungsformen mit einer Aufnahmeeinheit umfassen, auch wenn dies nicht explizit offenbart ist.

In manchen Ausführungsformen sind die Rollen in einem Raum zwischen dem Aufnahmeabschnitt für die Deichsel oder wenigstens einem Abschnitt hiervon, z. B. dessen äußerem Ende, und der Verbindung des Stützfußes mit der Auflageplatte angeordnet. In dieser Anordnung kann mittels Kraftausübung auf die Deichsel, insbesondere auf das Deichselende, das der Verbindung zur Auflageplatte entgegengesetzt ist, der Transportroller um den Kipppunkt derart gekippt werden, dass der Stützfuß entlastet und angehoben wird. Der Kipppunkt kann insbesondere zwischen den beiden Rollen in Verlängerung der Drehachsen der beiden Rollen angeordnet sein. Der Kipppunkt kann als Drehpunkt bezeichnet werden. Aufgrund der optionalen Anordnung des Kipppunkts zum Kippen des Transportrollers unterhalb des Gegenstands oder unter der Auflageplatte kann die erforderliche Kraftausübung auf die Deichsel oder einen Deichselabschnitt vorteilhaft geringer gegenüber einer Anordnung des Kipppunkts sein, der nicht unterhalb des Gegenstands oder unter der Auflageplatte liegt. Dieser Unterschied kann durch die angreifenden Kräfte an dem Transportroller und deren Hebelarme zum Kipppunkt begründet sein, wie dies mittels des Hebelgesetzes nachgewiesen werden kann.

In einigen Ausführungsformen sind einerseits genau zwei Rollen und andererseits optional genau ein oder genau zwei Stützfüße unterhalb der Auflageplatte oder unterhalb der Aufnahmeeinheit zum Abstützen des Transportrollers auf einem Untergrund angeordnet und/oder ausgebildet. Die Rollen und Stützfüße können als Eckpunkte in einer, zumindest annähernd, dreieckigen, rechteckigen oder quadratischen Form mit vorzugsweise möglichst groß bestimmtem Flächeninhalt der so aufgespannten geometrischen Figur angeordnet sein. Dadurch kann vorteilhaft eine stabile Position des Transportrollers mit einem optionalen Gegenstand auf einem Untergrund erzielt werden.

In manchen Ausführungsformen ist der wenigstens eine Stützfuß höhen- oder längenverstellbar.

In einigen Ausführungsformen sind die zwei Rollen mittels einer gemeinsamen Achse oder Welle miteinander verbunden. Die beiden Rollen können sich beispielsweise mittels Lager, z. B. Wälzlager, Kugellager oder Gleitlager, auf der gemeinsamen Achse drehen. Die Rollen können auf die Achse aufgeschoben bzw. aufgesteckt und anschließend axial befestigt und optional gesichert werden. Eine optionale axiale Sicherung kann einen Sicherungsring, z. B. einen Sprengring, je Lager umfassen.

In einigen Ausführungsformen ist die Deichsel in ihrer Länge verstellbar, um beispielsweise für unterschiedlich große Personen, die den Transportroller bewegen sollen, eine geeignete Griffhöhe zu ermöglichen. Die Deichsel kann beispielsweise einen mittleren Verbindungsbereich aufweisen, der zwei ineinander verschiebbare Rohrabschnitte aufweist. Die Rohrabschnitte können in vorgegebenen Längen fixiert werden, beispielsweise mittels Sicherungsstifte, Rastpositionen oder ähnlichem.

In einigen Ausführungsformen weist der zweite Endbereich einen Handgriff zum manuellen Bewegen des Transportrollers auf oder ist ein solcher. Der Handgriff kann beispielsweise als Steckaufsatz auf den zweiten Endbereich aufgesteckt bzw. aufgeschoben werden. Der Handgriff kann aus Kunststoff hergestellt sein. Der Handgriff kann reibschlüssig mit dem zweiten Endbereich verbunden sein und/oder auf einen rohrförmigen zweiten Endbereich aufgeklebt sein.

In manchen Ausführungsformen ist die Deichsel, z. B. ihr zweiter Endbereich, längenverstellbar. Hierdurch kann bei Bedarf optional die Hebelwirkung der Deichsel erhöht werden.

In einigen Ausführungsformen weist die Auflageplatte einen formschlüssigen Aufnahmeabschnitt zum Einschieben des Verbindungselements des ersten Endbereichs der Deichsel auf. Ein formschlüssiger Aufnahmeabschnitt kann eine Sacklochbohrung, eine Tasche oder ähnliches sein. Der formschlüssige Aufnahmeabschnitt kann eine Sicherung aufweisen, damit sich das Verbindungselement nicht unbeabsichtigt von der Auflageplatte lösen kann.

In einigen Ausführungsformen beträgt das Verhältnis von einem ersten Hebelarm zwischen einerseits der Drehachse und andererseits der Senkrechten eines Schwerpunkts des Gewichts des Transportrollers und dem Gewicht des optional zu transportierenden Gegenstands zu einem zweiten Hebelarm zwischen einerseits dem Kipppunkt und andererseits der Senkrechten eines an der Deichsel angreifenden Kraftvektors wenigstens eins zu vier, insbesondere eins zu sechs, weiter insbesondere eins zu acht. Die Hebelarme können als Hebelarme eines zweiarmigen Hebels betrachtet werden. Entsprechend dem Hebelgesetz gilt, dass die an dem zweiarmigen Hebel wirksam angreifenden Kräfte bzw. Kraftvektoren und die Hebelarme senkrecht aufeinander stehen. Wenn die Drehmomente, die durch die an den Hebelarmen angreifenden Kraftvektoren gleich groß und in ihrer Richtung gegensinnig ausgerichtet sind, dreht sich der Hebelarm um den Drehpunkt bzw. den Kipppunkt nicht. Aufgrund des Hebelgesetzes verhalten sich die Kräfte, genauer formuliert die Beträge der angreifenden Kraftvektoren, umgekehrt proportional zu den Hebelarmen. Bei einem Verhältnis des ersten Hebelarms zu dem zweiten Hebelarm von eins zu vier ist das Kraftverhältnis somit vier zu eins. Dies bedeutet bei einer rein exemplarischen Gewichtskraft von 1000 N, dass die an der Deichsel angreifende Kraft größer als 250 N sein muss, um den Transportroller um den Kipppunkt zu drehen. Wenn der zweite Hebelarm nicht viermal, sondern sechsmal größer ist als der erste Hebelarm, muss die an der Deichsel angreifende Kraft größer als 167 N sein. Wenn der zweite Hebelarm achtmal größer ist als der erste Hebelarm, muss die an der Deichsel angreifende Kraft größer als 125 N sein, um den Transportroller um den Kipppunkt zu drehen.

Das Verhältnis von zweitem Hebelarm zu erstem Hebelarm kann als Übersetzungsverhältnis bezeichnet werden. Somit beträgt bei einem Übersetzungsverhältnis von sechs zu eins die an der Deichsel aufzubringende Kraft ein Sechstel der Gewichtskraft des zu transportierenden Gegenstands und dem Transportroller. Bei einem angenommenen hohen zu transportierenden Gewicht im Verhältnis zu dem Gewicht des Transportrollers kann näherungsweise das Gewicht des Transportrollers vernachlässigt werden. Wenn das zu transportierende Gewicht beispielsweise ein gefüllter Pflanzenkübel ist, der 1000 N wiegt (also einer Masse von ca. 100 kg), und das Übersetzungsverhältnis sechs zu eins beträgt, muss eine Kraft von wenigstens 167 N an der Deichsel aufgebracht werden, um den Transportroller mit dem befüllten Pflanzenkübel zu kippen. Zur Verdeutlichung wird dies nachfolgend anhand eines rein exemplarischen Zahlenbeispiels erläutert.

Der zu transportierende Gegenstand in Form eines exemplarischen, gefüllten Pflanzenkübels wird mit einer Gewichtskraft F1 von 1000 N angenommen. Das Eigengewicht des Transportrollers wird aus Vereinfachungsgründen vernachlässigt. Weiterhin wird angenommen, dass der Pflanzenkübel mittig auf der Auflageplatte angeordnet ist. Der erste Hebelarm L1 zwischen dem Kipppunkt und der Senkrechten der Gewichtskraft F1 wird rein exemplarisch mit 0,13 m angenommen. Weiterhin wird angenommen, dass der zweite Hebelarm L2 zwischen dem Kipppunkt und der Senkrechten des an der Deichsel, insbesondere am Handgriff des zweiten Endbereichs der Deichsel, angreifenden Kraftvektors 0,95 m beträgt. Wenn der Transportroller bewegt werden soll, muss die am Handgriff angreifende Kraft F2 größer als die Gleichgewichtskraft sein, sodass der Stützfuß entlastet wird und der Transportroller eine Kippbewegung um die Rollen ausführt. Dies bedeutet, dass das Drehmoment der angreifenden Kraft F2 am Handgriff und dem Hebelarm L2 größer sein muss als das Drehmoment der Gewichtskraft F1 des Pflanzübels (1000 N) und dem Hebelarm L1. Per Formel kann das folgendermaßen beschrieben werden:

$$M1 = F1 * L1; M2 = F2 * L2$$

mit der Bedingung: M2 > M1

also: $F2^* L2 > F1^* L1 => F2 > (F1^* L1)/L2$

$$F2 > 1000\ N * (0{,}13\ m / 0{,}95\ m) \approx 1000\ N * 0{,}13684 = 136{,}84\ N$$

Die angreifende Kraft am Handgriff der Deichsel muss also größer als ca. 137 N sein. Dies entspricht ca. 1/7 der Gewichtskraft des zu transportierenden Pflanzenkübels.

Wenn der erste Hebelarm L1 größer wird, wird auch die aufzubringende Kraft am Handgriff der Deichsel entsprechend größer. Dies kann beispielsweise der Fall sein, wenn der Kipppunkt außerhalb, also nicht unter oder unterhalb des Gegenstands oder nicht unter der Auflageplatte, angeordnet wäre.

In einigen Ausführungsformen beträgt der Durchmesser der Rollen exemplarisch wenigstens 100 mm. Bei einem Durchmesser der Rollen von jeweils wenigstens 100 mm kann der Transportroller vorteilhaft einfach über einen unebenen Untergrund, beispielsweise über einen Kiesweg oder einen Weg mit Steinkanten oder kleinen Schwellen von Gewächshäusern, Terrassen oder ähnlichem geschoben oder gezogen werden. Rein exemplarisch könnten Schwellen bis zu einer Höhe von ca. 2 cm mit einem Rollendurchmesser von ca. 100 mm vorteilhaft einfach überwunden werden. Dies kann vorteilhaft sein, wenn der zu transportierende Gegenstand ein Pflanzenkübel oder ein Blumenkübel ist, der jahreszeitlich bedingt im Frühjahr oder im Herbst in einem Garten oder in einer Parkanlage versetzt werden soll.

Die Rollen können aus einem Kunststoff hergestellt sein oder Kunststoff umfassen. Beispielsweise können die Rollen ein hartes Material, beispielsweise Metall, aufweisen und als Laufflächen ein verglichen hiermit weicheres Material, z. B. einen elastischen Kunststoff, umfassen.

In einigen Ausführungsformen umfasst die Auflageplatte Schutzblenden oder Sichtblenden, die wenigstens die beiden Rollen und den wenigstens einen Stützfuß zumindest abschnittsweise nach außen abdecken. Diese Blenden können insbesondere an drei Seiten angeordnet werden, wobei beispielsweise die Seite, zu der der Transportroller hin gekippt wird, keine Blende oder eine kürzere Blende aufweist. Wenn der Transportroller beispielsweise ein dauerhafter Untersatz für einen Pflanzenkübel oder ein Blumenkübel ist, der in einem Garten oder einer Parkanlage abgestellt wird, kann es aus optischen Gründen gewünscht sein, wenn die Rollen und/oder der Stützfuß zumindest teilweise verdeckt werden. Die Blenden können bis wenige Zentimeter oder sogar Millimeter, je nach Einsatzbereich und individueller Ausgestaltung, über die Aufstellfläche für den Transportroller, also den Untergrund bzw. Boden, reichen. Neben den vorteilhaften optischen Eigenschaften können die Blenden auch verhindern, dass der Transportroller, z. B. bei Wind, umkippt. Die Blenden weisen in diesem Fall oder auch bei weicherem Untergrund wie feuchtem Rasen eine Stützfunktion auf.

Der Grad der Abdeckung kann unter anderem davon abhängig werden, wie stark der Transportroller zum Bewegen gekippt werden muss, ohne dass die Schutzblenden oder Sichtblenden die Bewegung behindern oder am Untergrund aufsetzen.

Die Schutz- und/oder Sichtblenden können hierin auch als untere und/oder seitliche Wandungen der Auflageplatte ausgestaltet sein oder bezeichnet werden.

In einigen Ausführungsformen weist die Auflageplatte eine Auflagefläche zum Aufsetzen des Gegenstands auf. Diese Auflagefläche kann im Wesentlichen eine Fläche oder Ebene oberhalb einer durch Rollen und Stützfüße aufgespannten Fläche umfassen. Eine derartige Anordnung der Auflagefläche kann sicherstellen, dass der Gegenstand zumindest weitgehend zentrisch auf der Auflageplatte angeordnet wird und mittels der beiden Rollen und dem Stützfuß oder den Stützfüßen sicher auf einem Untergrund steht. Der Schwerpunkt des Transportrollers mit dem Gegenstand ist dann weitgehend mittig bzw. zentrisch auf der Auflageplatte angeordnet und daher weitgehend stabil gegen ein Kippen. Wenn der zu transportierende Gegenstand beispielsweise ein großer Pflanzenkübel ist, der mit einer Pflanze und Pflanzenerde gefüllt ist und rein exemplarisch über 50 kg wiegt, sollte ein Umkippen des Transportrollers unbedingt verhindert werden.

In bestimmten Ausführungsformen weist die Auflagefläche der Auflageplatte eine Vertiefung und/oder eine strukturierte Oberfläche auf, um ein ungewolltes Verschieben des Gegenstands zu verhindern oder zumindest zu erschweren. Wenn beispielsweise die Rollen und der Stützfuß weitgehend äquidistant zueinander am äußeren Randbereich unterhalb des Gegenstands und unterhalb der Auflageplatte angeordnet sind, kann dies eine besonders stabile Lage ermöglichen. Die Stabilität hängt weiterhin stark von der Untergrundbeschaffenheit ab, auf der der Transportroller steht oder bewegt wird. Wenn der Untergrund uneben ist, eine Neigung aufweist und/oder beispielsweise Kies oder kleine Steine oder ähnliches aufweist, kann dies die Stabilität eines Gegenstands auf dem Transportroller verringern. Eine Vertiefung und/oder eine strukturierte Oberfläche der Auflagefläche kann vorteilhaft auch in diesen Situationen die Stabilität erhöhen.

In einigen Ausführungsformen umfasst die Auflagefläche der Auflageplatte wenigstens eine Funktionsfläche mit einem höheren Reibungskoeffizienten gegenüber der übrigen Auflagefläche. Eine Funktionsfläche mit einem höheren Reibungskoeffizienten kann eine Funktionsfläche sein, die ein ungewolltes Verschieben oder Verrutschen des zu transportierenden Gegenstands verhindert oder zumindest verringert. Eine derartige Funktionsfläche kann beispielsweise eine gummierte Fläche, eine Fläche mit einer erhöhten Oberflächenrauigkeit, eine Fläche mit Kunststoffnoppen oder eine andere Fläche mit einer sogenannten Anti-Rutsch-Beschichtung sein. Die Funktionsfläche kann einzelne beschichtete Abschnitte aufweisen, die regelmäßig oder unregelmäßig auf der Auflagefläche angeordnet sein können. Die Funktionsfläche kann selbstklebend sein.

In einigen Ausführungsformen ist die Auflageplatte mit dem Gegenstand lösbar verbunden. Der Gegenstand kann ein Behältnis, beispielsweise ein Pflanzenkübel sein. Eine lösbare Verbindung kann eine Schraubverbindung sein. Die lösbare Verbindung kann eine, zwei oder mehrere Schrauben zum Fixieren des Gegenstands mit der Auflageplatte umfassen. Ein Pflanzenkübel, der mittels einer lösbaren Verbindung mit der Auflageplatte fixiert ist, kann vorteilhaft für einen gewissen Zeitraum, beispielsweise einem halben Jahr, einem Jahr oder zwei Jahren vorteilhaft mittels der abnehmbaren Deichsel bewegt werden. Während eines Jahres kann dies jahreszeitenbedingt und/oder temperaturbedingt sein, oder aus optischen Gründen zur Gartengestaltung. Nach diesem Zeitraum kann es notwendig sein, wegen eines Pflanzwechsels oder eines Wechsels der Größe des Pflanzenkübels aufgrund eines Pflanzwachstums, den Pflanzenkübel zu wechseln und einen anderen Pflanzenkübel mit der Auflageplatte zu verbinden.

In einigen Ausführungsformen ist die Auflageplatte integral mit dem Gegenstand ausgebildet. Eine integrale Ausbildung kann eine einstückige Ausbildung von der Auflageplatte mit dem Gegenstand sein. Eine integrale Ausbildung kann eine Ausbildung als eine Einheit der Auflageplatte mit dem Gegenstand sein. Der Gegenstand kann beispielsweise ein Pflanzenkübel sein, der einen erweiterten und dickeren Boden aufweist. Der Boden kann in Form einer Auflageplatte ausgebildet sein, der eine Verbindung mit der Deichsel sowie wenigstens einen integrierten Stützfuß aufweist. Ferner können Halterungen, Flansche oder Adapter integriert sein, an denen wenigstens zwei Rollen auf einer Achse befestigt werden. Eine integrale Bauweise kann vorteilhaft für eine Herstellung mittels Kunststoffs genutzt werden. Der Kunststoff kann ein faserverstärkter Kunststoff sein. Ebenso kann eine integrale Bauweise für eine Fertigung mittels Verbundwerkstoffe vorgesehen sein.

In einigen Ausführungsformen weist die Deichsel einen Anschlag bzw. Abschluss des ersten Endbereichs auf. Der Anschlag kann als ein Abschlussblech ausgestaltet sein. Der Anschlag kann die Lage und Position der Deichsel im verbundenen Zustand von Deichsel und Auflageplatte mitbestimmen. Er kann dem Nutzer optisch andeuten, wann oder ob die Deichsel weit genug in den Aufnahmeabschnitt hineingeschoben ist.

In einigen Ausführungsformen weist die Deichsel wenigstens zwei Stege auf, die voneinander bestandet sein können, und welche beide in den Aufnahmeabschnitt eingeschoben werden. Der Abstand zwischen ihnen dient dazu, ein ungewolltes Kippen in einer anderen Richtung als der mittels Deichsel eingeleiteten Kippung möglichst zu verhindern. Hierzu können die Stege wie eine Gabelstaplergabel in den Aufnahmeabschnitt eingeführt werden. Dabei kann der Aufnahmeabschnitt zur sicheren Führung der Stege mehr als nur eine Einschiebeöffnung aufweisen oder hieraus bestehen.

Der Aufnahmeabschnitt kann in manchen Ausführungsformen ausgestaltet sein, um die Stege oder eine Ausgestaltung der Spitze der Deichsel möglichst großflächig in Kontakt mit der Unterseite der Auflageplatte oder einer Aufstellfläche für z. B. einen Pflanzenkübel auf dem Transportroller zu bringen.

In einigen Ausführungsformen liegen die Stege bei eingeschobener Deichsel parallel zur Auflageplatte oder zu deren Unterseite an.

In einigen Ausführungsformen weist die Deichsel kein Rad oder keine Rolle auf.

In einigen Ausführungsformen weist die Deichsel keine nicht-lösbare Verbindung mit Rädern oder Rollen auf.

In einigen Ausführungsformen kann die Deichsel nicht relativ zur Auflageplatte gedreht werden.

In einigen Ausführungsformen ist der Transportroller kein Leiterwagen oder kein Dreirad und weist keine Lenkung, keinen Sitz oder Sattel sowie keine Rollen auf. In manchen Ausführungsformen sind die hierin offenbarten Rollen und/oder weitere Rollen des Transportrollers nicht angeordnet, um um eine Achse senkrecht zur Rotationsachse der Rollen oder senkrecht zur Auflageplatte drehbar bzw. schwenkbar zu sein.

Die Auflageplatte kann in einigen Ausführungsformen eine Fläche sein, die eben oder nicht eben ist. Die Auflageplatte kann eine Bodenfläche eines Innenraums, beispielsweise eines Behältnisses, sein.

In einigen Ausführungsformen weist der Transportroller keine Schwenkräder oder der Auflageplatte zugeordnete Schwenkräder auf.

In einigen Ausführungsformen ist die Deichsel teleskopierbar. Mittels einer teleskopierbaren Deichsel kann die Länge der Deichsel, insbesondere stufenlos, verändert werden. Ein entsprechend geeigneter Mechanismus kann vorgesehen sein.

Einer oder mehrere der oben stehenden sowie der folgenden Vorteile können mit erfindungsgemäßen Ausführungsformen erzielt werden.

Ein Vorteil der vorliegenden Erfindung besteht darin, dass beispielsweise ein Großblumentopf bzw. ein Pflanzenkübel, in dem eine große Pflanze, z. B. eine Palme, eingepflanzt ist, mit dem erfindungsgemäßen Transportroller sowohl vor dem Bewegen als auch nach dem Bewegen vorteilhaft auf der Auflageplatte des Transportrollers verbleiben kann. Eine separate Deichsel zum Verschieben des Pflanzenkübels kann für den Einsatzzweck des Bewegens, also beispielsweise eines Verschiebens oder Verrückens der Pflanze, mit der Auflageplatte temporär verbunden werden. Besonders für große Pflanzen oder Blumen kann es vorteilhaft sein, wenn die Pflanze oder Blume aus Gewichtsgründen nicht für einen Transport hochgehoben werden muss. Mit einer abnehmbaren Deichsel und einem erfindungsgemäßen Kipppunkt unterhalb der Pflanze oder der Blume, also unterhalb des zu transportierenden Gegenstands oder unter der Auflageplatte, ist es vorteilhaft ohne großen Kraftaufwand möglich, den Transportroller zu bewegen. Somit kann ein schwerer Gegenstand vorteilhaft einfach und schnell von einem Stellplatz zu einem anderen Stellplatz verschoben werden. Auch kleinere Verschiebewege, beispielsweise von einem Außenbereich für eine Pflanze in der Sommerzeit in einen Innenbereich oder einen geschützten Bereich in der Winterzeit, können einfach ohne großen Kraftaufwand, insbesondere ohne die Pflanze anheben zu müssen, vorgenommen werden. Unebene Verschiebewege und kleinere Stufen oder Hindernisse können, je nach der Ausführungsart des erfindungsgemäßen Transportrollers, überwunden und bewältigt werden. Der Standplatz vor und nach dem Verschieben sollte zumindest einen stabilen und im Wesentlichen ebenen Untergrund aufweisen, um ein ungewolltes Kippen oder Umfallen der Pflanze, oder allgemein des Gegenstands, zu verhindern, sofern der Gegenstand dauerhaft auf der Auflageplatte des Transportrollers verbleiben soll.

Mit dem erfindungsgemäßen Transportroller können vorhandene Pflanzenroller, Möbelroller, Sackkarren, Plateauwagen oder ähnliches ersetzt werden. Die bisher verwendeten Systeme erfordern oft ein Anheben des zu transportierenden Gegenstands und/oder ein schwieriges und umständliches Bewegen des entsprechenden Rollers, Karrens oder Wagens. Diese Nachteile können mit dem erfindungsgemäßen Transportroller vermieden und überwunden werden.

Ein weiterer Vorteil des erfindungsgemäßen Transportrollers kann darin bestehen, dass die zu transportierenden Gegenstände innerhalb kurzer Zeit umgestellt werden können. Beispielsweise kann es für bestimmte Pflanzen notwendig sein, wetterbedingt z. B. aufgrund unmittelbar bevorstehender Frostperioden, einen neuen und geeigneten Standplatz zu wählen. Besonders einfach ist es dabei, die Pflanzen dauerhaft auf der Auflageplatte des Transportrollers zu belassen und nur die Deichsel für den Transport temporär anzuschließen.

Schwere Lasten können mit dem erfindungsgemäßen Transportroller einfach und ohne großen Kraftaufwand bewegt werden. Aufgrund des unterhalb des Gegenstands, unter der Auflageplatte oder unter der Aufnahmeeinheit liegenden Kipppunkts, ist der erste Hebelarm zwischen dem Schwerpunkt und dem Kipppunkt klein. Der zweite Hebelarm zwischen dem Kipppunkt und dem Angriffspunkt an der Deichsel kann dagegen aufgrund der Deichselgeometrie sehr groß sein. Basierend auf dem Hebelgesetz können somit sehr schwere Lasten, beispielsweise große und schwere Pflanzen in Pflanzenkübeln, mit einem relativ geringen Kraftaufwand vorteilhaft einfach gekippt und auf den Rollen bewegt und verschoben werden. Das Übersetzungsverhältnis kann beispielsweise eins zu acht betragen. Eine Last von beispielsweise 1000 N kann somit mit einem Kraftaufwand von nur 125 N gekippt und bewegt werden.

Mit Rollen, die rein exemplarisch einen Durchmesser von wenigstens 100 mm aufweisen, ist der Transportroller weiter vorteilhaft stabil und wendig bewegbar.

Der Stützfuß, der als Abstellstempel und/oder als dritter Auflagepunkt, neben den beiden Rollen als erstem und zweitem Auflagepunkt des Transportrollers, bezeichnet werden kann, ermöglicht vorteilhaft eine Fixierung auf dem Untergrund nach dem Abstellen. Diese Fixierung kann ein ungewolltes Wegrollen oder Verschieben des Transportrollers verhindern oder zumindest erschweren. Alle drei Auflagepunkte verhindern oder erschweren zumindest ein selbstständiges, geringfügiges Bewegen, das als Wackeln bezeichnet werden kann, des Transportrollers auf unebenem Untergrund Boden. Ebenso kann der erfindungsgemäße Transportroller mehrere Stützfüße als Auflagepunkte aufweisen. Je nach Untergrund kann dies die Stabilität und Standfestigkeit weiter erhöhen. Optionale Mechanismen zum Verändern der Höhe des wenigstens einen Stützfußes können vorgesehen sein.

Die vorliegende Erfindung wird im Folgenden anhand der beigefügten, zum Teil vereinfachten Figuren, in welchen identische Bezugszeichen gleiche oder ähnliche Bauteile bezeichnen, exemplarisch erläutert. In den Figuren gilt:

Fig. 1         zeigt einen erfindungsgemäßen Transportroller mit einem aufgesetzten Pflanzenkübel in einer Seitenansicht, wobei eine Deichsel noch nicht mit einer Auflageplatte des Transportroller verbunden ist;

Fig. 2         zeigt den erfindungsgemäßen Transportroller aus Fig. 1 mit verbundener Deichsel;

Fig. 3a        zeigt den erfindungsgemäßen Transportroller aus Fig. 2, der von einem Nutzer mit einer ersten angreifenden Kraft an der Deichsel gekippt wird;

Fig. 3b        zeigt den erfindungsgemäßen Transportroller aus Fig. 3a, der vom Nutzer mit einer zweiten angreifenden Kraft an der Deichsel gekippt wird;

Fig. 4         zeigt den erfindungsgemäßen Transportroller aus Fig. 2 in einer Ansicht von vorne;

Fig. 5         zeigt den erfindungsgemäßen Transportroller aus Fig. 2 in einer Ansicht von oben;

Fig. 6a-c      zeigen den erfindungsgemäßen Transportroller in einer weiteren Ausführungsform jeweils in einer Seitenansicht und in einer perspektivischen Ansicht;

Fig. 7         zeigt den erfindungsgemäßen Transportroller aus Fig. 6, ohne Deichsel, in einer Ansicht von unten;

Fig. 8         zeigt einen Ausschnitt des erfindungsgemäßen Transportrollers aus Fig. 6 mit den Stegen der Deichsel zum Verbinden mit den Taschen an der Auflageplatte in einer perspektivischen Ansicht;

Fig. 9a-c      zeigen den erfindungsgemäßen Transportroller in einer weiteren Ausführungsform mit verbundenem Pflanzenkübel jeweils in einer Seitenansicht und in einer perspektivischen Ansicht;

Fig. 10a-c     zeigen den erfindungsgemäßen Transportroller in einer weiteren Ausführungsform in integraler Bauweise jeweils in einer Seitenansicht und in einer perspektivischen Ansicht;

Fig. 11a-c     zeigen den erfindungsgemäßen Transportroller in einer weiteren Ausführungsform in verschiedenen Ansichten, wobei der Stützfuß in Form einer Stützkante der schalenförmigen Auflageplatte ausgebildet ist; und

**Fig. 12a, b** zeigen den erfindungsgemäßen Transportroller der Fig. 11 a -c in zwei perspektivischen Ansichten.

**Fig. 1** zeigt einen exemplarischen erfindungsgemäßen Transportroller 100 mit einem aufgesetzten Pflanzenkübel 200 in einer Seitenansicht. Eine Deichsel 1 des Transportrollers 100 ist noch nicht mit einer Auflageplatte 3 für den Pflanzenkübel 200 verbunden. Die Auflageplatte 3 ist in diesem Ausführungsbeispiel rein exemplarisch wannenförmig bzw. schalenförmig ausgebildet oder weist hier eine Fortsetzung, welche sich von der Auflageplatte 3 gegen den Boden erstreckt, auf. Die Auflageplatte 3 in Fig. 1 ist hier rein exemplarisch nach unten offen. Wenn im Folgenden auf die Auflageplatte 3 Bezug genommen wird, ist damit meistens die Bodenplatte der Auflageplatte 3 gemeint, auf der, bezogen auf Fig. 1, der Pflanzenkübel 200 aufgesetzt ist. Gleichwohl kann die Auflageplatte 3 optional eine sich an sie anschließende Schürze oder dergleichen aufweisen, welche einen Raum, welcher unterhalb der Bodenplatte, der Auflageplatte oder ihrer Aufstellfläche für z. B. den Pflanzenkübel 200 liegt, seitlich zumindest abschnittsweise begrenzt, wie dies in Fig. 1 gezeigt ist.

Unterhalb der Auflageplatte 3 sind, rein exemplarisch zwei, Rollen 5 (in der Seitenansicht ist nur eine Rolle 5 sichtbar) und ein Stützfuß 7 (optional mehr als einer) angeordnet. Die Rollen 5 weisen optional jeweils eine Achsaufhängung 9 auf, die optional pro Achsaufhängung z. B. mit zwei Befestigungsplatten 11, die vorzugsweise jeweils seitlich zu den Rollen 5 angeordnet sind, verbunden sind. Die Befestigungsplatten 11 sind an der Unterseite der Auflageplatte 3 befestigt, beispielsweise mittels einer Lötverbindung. Alternativ können die Befestigungsplatten 11 mit wieder lösbaren Verbindungen, beispielsweise mittels Schrauben oder Nieten oder alternativer nicht-lösbarer Fügeverfahren an der Auflageplatte 3 befestigt sein.

Die Achsaufhängung 9 kann mit der optionalen Befestigungsplatte 11 lösbar, z. B. mittels Schrauben, Haken, Schienen oder ähnlichem, oder nicht lösbar, z. B. gelötet oder geschweißt, verbunden sein. Eine lösbare Verbindung der Achsaufhängung 9 mit der Befestigungsplatte 11 kann vorteilhaft sein, wenn die Rollen 5 austauschbar sein sollen. Ein Austausch der Rollen 5 kann verschleißbedingt notwendig sein oder aufgrund eines modularen Konzeptes für verschiedene Rollentypen (z. B. unterschiedliche Materialien für unterschiedliche Einsatzbereiche und unterschiedlich schwere Lasten zum Transportieren) und/oder für unterschiedliche Rollengrößen (z. B. für verschiedene Untergrundbeschaffenheiten) gewünscht sein.

In Fig. 1 wird rein exemplarisch ein ebener Untergrund 300 dargestellt. Alternativ kann der Untergrund 300 uneben sein, Vertiefungen oder Löcher aufweisen, oder mit Kies, Steinen oder kleinen Schwellen versehen sein, wie es beispielsweise in Gartenanlagen oder Parks möglich ist.

Auf der Auflageplatte 3 ist rein exemplarisch ein Pflanzenkübel 200 angeordnet. Der Pflanzenkübel 200 kann mit Pflanzen und/oder Pflanzenerde gefüllt sein. Andere Gegenstände können ebenfalls mit dem Transportroller transportiert werden.

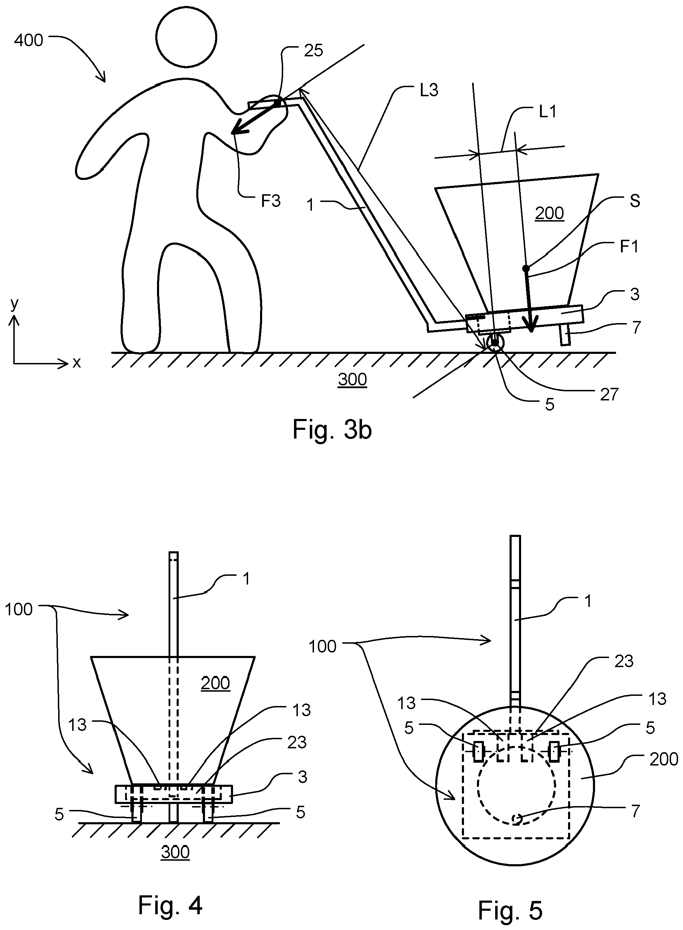

Der Transportroller 100 kann ohne Deichsel 1 bei aufgesetztem Pflanzenkübel 200 beispielsweise an einem ersten Stellplatz über einen bestimmten Zeitraum, z. B. über mehrere Monate verbleiben. Danach kann ein Standortwechsel, z. B. jahreszeitbedingt, notwendig sein, um eine im Pflanzenkübel 200 wachsende Pflanze an einen anderen, zweiten Stellplatz oder Standplatz zu verschieben. Dieses Verschieben kann mithilfe des erfindungsgemäßen Transportrollers 100 vorteilhaft schnell und ohne großen Kraftaufwand erfolgen, nachdem die Deichsel 1 mit der Auflageplatte 3 verbunden wurde und der Transportroller 100 hiermit ein wenig gekippt verfahren und an dem vorgesehenen, neuen Standort wieder abgestellt wird. Dazu ist es nicht notwendig, den Pflanzenkübel 200 selbst hochzuheben oder anzuheben. Vielmehr kann die gesamte Anordnung mit einem geringen Kraftaufwand gekippt (siehe Fig. 3a, b) und anschließend verschoben werden. Die Deichsel 1 kann nach dem Versetzen des Pflanzenkübels 200, zusammen mit der Auflageplatte 3, wieder entkoppelt und andernorts aufbewahrt werden, bis ein erneutes Verschieben des Pflanzenkübels 200 notwendig werden sollte.

Die Verbindung der Deichsel 1 mit der Auflageplatte 3 wird rein exemplarisch mittels zwei nebeneinander angeordneter Stege 13 (in Fig. 1 ist wegen der Seitenansicht nur ein Steg 13 erkennbar) ausgeführt, die in zwei Taschen 15 in der Auflageplatte 3 eingeschoben werden. Die Stege 13 können als Verbindungselemente, Führungen oder Einschubvorrichtungen bezeichnet werden. Die Taschen 15 können als formschlüssige Aufnahmeabschnitte, Vertiefungen oder Nuten bezeichnet werden. In der Ausführungsform der Fig. 1 werden die Stege 13 lediglich in die Taschen 15 eingeschoben, ein beispielsweise vollständiger kraftschlüssiger Reibschluss findet optional nicht statt. Die Stege 13 der Deichsel 1 können ähnlich wie die Gabelträger eines Gabelstaplers ausgebildet sein, die lediglich in entsprechende Paletten aufgeschoben werden, die Paletten anschließend um einen kleinen Winkel kippen und an einen anderen Ort verfahren.

Zusätzlich zu den eingeschobenen Stegen 13 kann eine Verriegelung oder eine Sicherung der Stege 13 erfolgen, beispielsweise mittels Sicherungssplints, die senkrecht zur Einschubrichtung durch die Auflageplatte 3 und die Stege 13 eingeschoben bzw. eingesteckt werden können (in Fig. 1 nicht dargestellt). Andere Verschlussmöglichkeiten oder Sicherungselemente sind ebenso möglich, um ein ungewolltes Entkoppeln der Deichsel 1 mit der Auflageplatte 3 während eines Transports zu verhindern.

Als optionaler stirnseitiger Anschlag bzw. Abschluss des ersten Endbereichs 17 der Deichsel 1 ist exemplarisch ein Abschlussblech 23 (in der Seitenansicht dargestellt) vorgesehen. Die Lage und Position des Abschlussblechs 23 im verbundenen Zustand von Deichsel 1 und Auflageplatte 2 ist in Fig. 4 dargestellt. Das Abschlussblech 23 kann eine Abschlussblende sein, die aus jedem geeigneten Material hergestellt werden kann, beispielsweise aus Metall, aus Kunststoff oder aus einem Verbundmaterial. Das Abschlussblech kann optional die Einschubtiefe der Verbindungselemente 13 vorteilhaft begrenzen und/oder festlegen.

Die Deichsel 1 kann in der Geometrie unterschiedlich aufgebaut sein und genau ein oder mehrere Materialien aufweisen. Die nachfolgend beschriebene Deichsel 1 ist eine rein exemplarische Ausführungsform.

Die Deichsel 1 kann in drei Bereiche bzw. Abschnitte untergliedert sein. Ein erster Endbereich 17 umfasst das wenigstens eine Verbindungselement 13 zu ihrem Verbinden mit der Auflageplatte 3. In Fig. 1 sind exemplarisch zwei Stege als Verbindungselemente 13 ausgeführt. Weiterhin umfasst der erste Endbereich 17 die Verbindung zu einem mittleren Verbindungsbereich 19. Der mittlere Verbindungsbereich 19 ist der wesentliche Abschnitt der Deichsel 1, der zur Hebelwirkung zum Kippen des Transportrollers 1 beiträgt und in den nachfolgenden Figuren näher beschrieben ist. Ein zweiter Endbereich 21 schließt sich an das andere Ende des mittleren Verbindungsbereichs 19 an. Der zweite Endbereich 21 umfasst vorzugsweise insbesondere einen Handgriff zum Führen und Bewegen des Transportrollers 100.

Die Deichsel 1 kann einteilig oder mehrteilig konstruiert und hergestellt sein. Eine einteilige Deichsel 1 kann beispielsweise ein einmal oder mehrfach, hier zweifach, gebogenes Rohr sein. Eine mehrteilige Deichsel 1 kann einen mittleren Verbindungsbereich 19 aufweisen, an den die beiden Endbereiche 17, 21 angesteckt, angelötet, angeschweißt, angeschraubt oder anders angefügt sind.

Die Winkelstellungen zwischen den Teilbereichen der Deichsel 1, insbesondere zwischen dem ersten Endbereich 21 und dem mittleren Verbindungsbereich 19 sowie zwischen dem mittleren Verbindungsbereich 19 und dem zweiten Endbereich 21, sind hier rein exemplarisch.

**Fig. 2** zeigt den erfindungsgemäßen Transportroller 100 aus Fig. 1, wobei in Fig. 2 die Deichsel 1 mit der Auflageplatte 3 verbunden ist. Die Verbindung wurde mittels, insbesondere manuellen, Einsteckens oder Einschiebens der Stege 13 in die Taschen 15 hergestellt. Die Verbindung weist in dieser exemplarischen Ausführungsform keine Sicherung gegen ein unbeabsichtigtes Entkoppeln bzw. Herausrutschen der Deichsel 1 aus der Auflageplatte 3 auf. Die Verbindung kann vorteilhaft schnell und einfach, ohne hohen Kraftaufwand und ohne weitere mechanische Verriegelungen hergestellt werden, beispielsweise mit einem einzigen Handgriff des Nutzers, ohne dass dieser sich bücken muss. Es sind zum Verbinden keine weiteren Werkzeuge notwendig.

In dieser Anordnung ist der Transportroller 100 mit dem exemplarischen Pflanzenkübel 200 dazu vorbereitet, nach einer Kippbewegung (siehe Fig. 3) verschoben zu werden, beispielsweise mittels einer Ziehbewegung oder einer Schubbewegung.

**Fig. 3a** zeigt den erfindungsgemäßen Transportroller 100 aus Fig. 2, der vom Nutzer 400 mittels Handkraft gekippt wird. Die Kippbewegung entlastet den Stützfuß 7 und verlagert das Gewicht des Pflanzenkübels 200 auf die beiden Rollen 5. Die Kippbewegung ist somit eine Voraussetzung für ein anschließendes Bewegen des Transportrollers 100, um den Pflanzenkübel 200 zusammen mit der Auflageplatte 3 zu versetzen und an einem anderen Standplatz wieder abzusetzen.

Die Höhe der aufzubringenden Handkraft F2, die am zweiten Endbereich 21 der Deichsel 1 angreift, hängt nach dem Hebelgesetz unter anderem von der Richtung der Handkraft F2 (als Kraftvektor) und dem Hebel zum Drehpunkt, der hier als Kipppunkt 27 bezeichnet wird, ab. Wenn die Handkraft F2 senkrecht nach unten, also parallel zur Gewichtskraft F1 des Pflanzenkübels 200 angreift, entspricht die Hebellänge bzw. der Hebelarm der Länge L2. Dies entspricht nach dem Hebelgesetz der Senkrechten des an der Deichsel 1 angreifenden Kraftvektors F2. Das Drehmoment M2 kann durch Multiplikation der (Größe der) angreifenden Kraft F2 mit der Größe des Hebelarms L2 bestimmt werden. Entsprechend wird das zweite angreifende Drehmoment M1 durch Multiplikation der Gewichtskraft F1 mit dem Hebelarm L1 bestimmt. S entspricht dem Schwerpunkt des Pflanzenkübels 200. Das Eigengewicht des Transportrollers 100 wird aus Vereinfachungsgründen gegenüber dem Gewicht des Pflanzenkübels 200 vernachlässigt. Um den Transportroller 100 um den Kipppunkt 27 zu kippen, muss das Drehmoment M2 größer als M1 sein. Dies kann mittels der folgenden Gleichung bestimmt werden.

$$M2 = F2 * L2 > M1 = F1 * L1$$

F1   Gewichtskraft des Pflanzenkübels 200
F2   an der Deichsel 1 angreifende Handkraft
L1   Hebelarm zwischen dem Kipppunkt 27 und der Richtung der Gewichtskraft F1
L2   Hebelarm zwischen dem Kipppunkt 27 und der Richtung von F2

Daraus folgt für die angreifende Handkraft an der Deichsel 1:

$$F2 > (F1 * L1) / L2$$

Dies kann mit einem rein exemplarischen Zahlenbeispiel verdeutlicht werden:

F1 = 1000 N
L1 = 130 cm; 0,13 m
L2 = 700 cm; 0,7 m

$$F2 > 1000\ N * (0,13\ m / 0,7\ m) \approx 1000\ N * 0,186 = 186\ N$$

Die notwendige, angreifende Handkraft F2 an der Deichsel 1 zum Kippen des Transportrollers 100 beträgt somit ca. 186 N bei einem angenommenen Gesamtgewicht des Pflanzenkübels 200 von 1000 N. Diese Handkraft entspricht etwa 1/5 des zu transportierenden Gewichts. Dieses Verhältnis korreliert somit direkt mit den beiden Längen L1 und L2. Anders ausgedrückt, ist das Verhältnis umso kleiner, je geringer der Abstand des Kipppunkts 27 zum Schwerpunkt S ist. Das Verhältnis wird gleichfalls umso kleiner, je größer der Abstand bzw. der Hebelarm L2 zwischen dem Kipppunkt 27 und der Richtung der angreifenden Handkraft F2 an der Deichsel 1 ist. Die Länge des Hebelarms L2 hängt also von der Geometrie der Deichsel 1 ab. Die Länge des Hebelarms L1 zwischen dem Kipppunkt 27 und der Richtung der Gewichtskraft F1 ist erfindungsgemäß klein, weil der Kipppunkt 27 zum Kippen des Transportrollers 100 unterhalb des Gegenstands, hier des Pflanzenkübels 200, und unterhalb der Auflageplatte 3 nahe dem Schwerpunkt S angeordnet ist.

**Fig. 3b** zeigt den erfindungsgemäßen Transportroller aus Fig. 3a, der vom Nutzer 400 mit einer zweiten angreifenden Kraft F3 an der Deichsel 1 gekippt wird. Die zweite angreifende Kraft F3 unterscheidet sich von der Kraft F2 aus Fig. 3a durch ihre Wirkrichtung, nämlich nicht senkrecht zum Boden 300 hin, sondern längs des Unterarms zum Nutzer 400 hin gerichtet. Dadurch ist der Hebelarm L3 länger als der Hebelarm L2 aus Fig. 3a. Nach der oben angegebenen Formel des Hebelgesetzes wird daher die notwendige Größe der Kraft F3 kleiner, um den Transportroller 100 um den Kipppunkt 27 zu kippen. Der Hebelarm L3 ist näherungsweise um ca. die Hälfte des Hebelarms L2 länger.

$$F3 > (F1 * L1) / L3$$

Damit kann in einem rein exemplarischen Zahlenbeispiel die notwendige Handkraft F3 berechnet werden:

F1 = 1000 N
L1 = 130 cm; 0,13 m
L3 = 1050 cm; 1,05 m

$$F3 > 1000\ N * (0,13\ m / 1,05\ m) \approx 1000\ N * 0,124 = 124\ N$$

Die jetzt notwendige, an der Deichsel 1 angreifende Handkraft F3 zum Kippen des Transportrollers 100 beträgt nur noch ca. 124 N bei demselben angenommenen Gesamtgewicht des Pflanzenkübels 200 von 1000 N. Diese Handkraft entspricht etwa 1/8 des zu transportierenden Gewichts.

**Fig. 4** zeigt den erfindungsgemäßen Transportroller 100 aus den vorangegangenen Figuren in einer Ansicht von vorne, bezogen auf die Ansichten aus den vorangegangenen Figuren von rechts. In dieser Ansicht in Fig. 4 sind die beiden Rollen 5, der mittig angeordnete Stützfuß 7 und die zwei Stege 13 erkennbar. Die beiden Stege 13 werden vom Abschlussblech 23 gestützt, insbesondere, um die auftretenden Biegemomente auf die Stege 13 im Kippzustand zu verringern.

Weiterhin ist in Fig. 4 deutlich erkennbar, dass die Deichsel 1 optional mittig zur Auflageplatte 3 an dieser angeordnet ist.

**Fig. 5** zeigt den erfindungsgemäßen Transportroller 100 aus Fig. 4 in einer Ansicht von oben.

In dieser Ansicht ist die optional weitgehend mittige oder zentrale Anordnung des Pflanzenkübels 200 auf der Auflageplatte 3 gut zu erkennen. Insbesondere ist die Basisauflagefläche (der Boden) des Pflanzenkübels 200 im Wesentlichen oberhalb eines Dreiecks angeordnet, das von den beiden Rollen 5 und dem Stützfuß 7 gebildet oder aufgespannt wird. Dadurch steht der Pflanzenkübel 200 stabil mit der Auflageplatte 3 auf dem Boden 300.

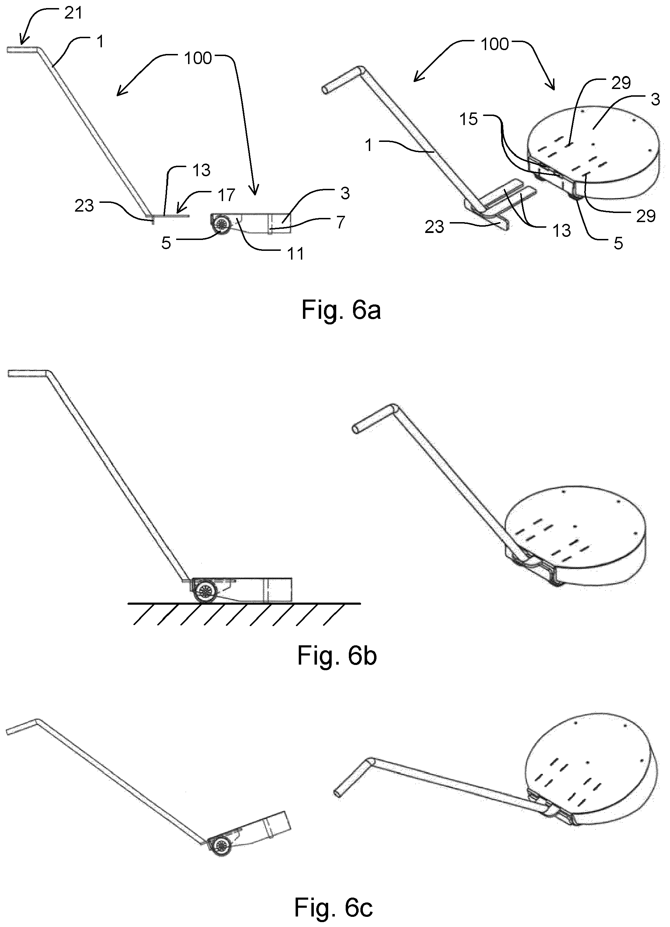

**Fig. 6a** zeigt den erfindungsgemäßen Transportroller 100 in einer weiteren Ausführungsform in einer Seitenansicht (links) und in einer perspektivischen Ansicht (rechts). Die beispielhafte Anordnung der optionalen, hier exemplarisch flächig ausgestalteten, Stege 13, Taschen 15 und des Abschlussbleches 23 sind hier deutlich erkennbar.

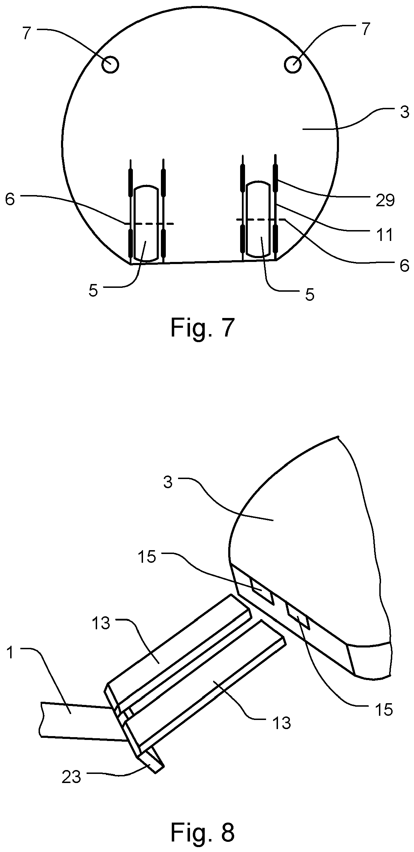

In dieser Ausführungsform weist die wannenförmige Auflageplatte 3 rein exemplarisch eine runde Form auf. Anstatt eines Stützfußes 7, wie dies in den Figuren 1 bis 5 dargestellt wurde, kann die Ausführungsform in Fig. 6 zwei oder mehr Stützfüße 7 umfassen. Dies ist in der Ansicht von unten in Fig. 7 dargestellt, in der die Position von zwei Stützfüßen 7 erkennbar ist.

Die Stützfüße 7 sind optional höhen oder längenverstellbar, was beispielsweise dem Ausgleich eines unebenen Untergrunds dienen kann.

Weiterhin werden die optionalen Lötverbindungen zwischen der Befestigungsplatte 11 und der Auflageplatte 3 als rein exemplarische Fixierungsmöglichkeit in der perspektivischen Ansicht rechts in Fig. 6a dargestellt.

Rein exemplarisch verlaufen die beiden, hier flächigen, Stege 13 hier in Längsrichtung parallel. Es sind an dieser Stelle auch zueinander in einem Winkel stehende Stege denkbar.

Weiterhin erstreckt sich die Längsachse des zweiten Endbereichs 21 der Deichsel 1, hier in Form eines Handgriffes, exemplarisch parallel zur Längsachse des ersten Endbereichs 17 der Deichsel 1, hier in Form der flächigen Stege 13. Rein beispielhaft bilden die Stege 13 mit dem Abschlussblech 23 einen rechten Winkel. Optional sind hier andere Winkelstellungen oder auch eine Integrierung des Abschlussblechs 23 in den ersten Endbereich 17 (siehe Fig. 1) möglich.

**Fig. 6b** zeigt den erfindungsgemäßen Transportroller 100 aus Fig. 6a mit der verbundenen Deichsel 1. Die Stege 13 wurden in die Taschen 15 eingeführt. Die Einschubtiefe ist durch das Abschlussblech 23 begrenzt, es liegt hier bei vollständig eingeführter Deichsel eng an der Auflageplatte 3 an.

**Fig. 6c** zeigt den erfindungsgemäßen Transportroller 100 aus Fig. 6b mit der verbundenen Deichsel 1 in einer gekippten Ansicht. Aus Vereinfachungsgründen werden die für den Kippvorgang notwendigen angreifenden Kräfte (siehe Fig. 3a und Fig. 3b) nicht dargestellt.

**Fig. 7** zeigt den erfindungsgemäßen Transportroller 100 aus Fig. 6, ohne Deichsel 1, in einer Ansicht von unten. In dieser Ansicht sind die Anordnungen der beiden Stützfüße 7, der Rollen 5, der Drehachsen 6 der Rollen 5, der Befestigungsplatten 11 jeweils seitlich der Rollen 5 sowie der Lötverbindungen 29 der Befestigungsplatten 11 mit der Unterseite der Auflageplatte 3 gut erkennbar.

**Fig. 8** zeigt einen Ausschnitt des erfindungsgemäßen Transportrollers 100 aus Fig. 6 mit den Stegen 13 der Deichsel 1 zum Verbinden der Deichsel 1 mit den Taschen 15 der Auflageplatte 3 in einer perspektivischen Ansicht.

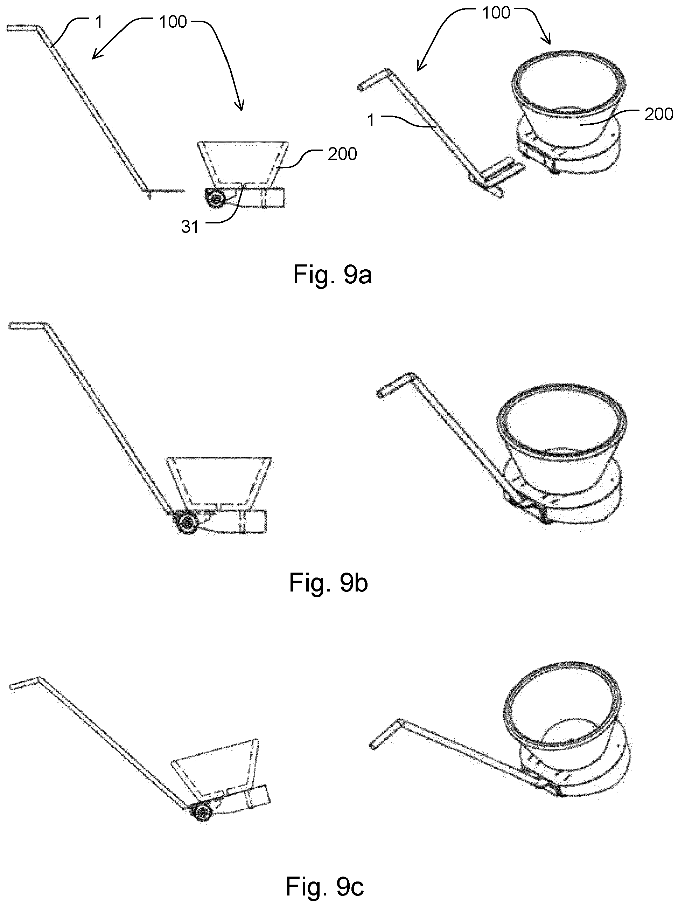

**Fig. 9a** zeigt den erfindungsgemäßen Transportroller 100 in einer weiteren Ausführungsform mit verbundenem Pflanzenkübel 200 in einer Seitenansicht (links) und in einer perspektivischen Ansicht (rechts). Der Pflanzenkübel 200 kann unlösbar oder wieder lösbar beispielsweise mittels einer Schraubverbindung 31 mit der Auflageplatte 3 verbunden werden.

Pflanzenkübel 200 weisen, oft im Boden mittig angeordnet, bereits eine Öffnung auf, um Gießwasser für die Pflanze in einer Schale aufzufangen oder um überschüssiges Gießwasser nach unten abzulassen. Diese Öffnung kann für die Fixierung bzw. Verbindung mit der Auflageplatte 3 genutzt werden. In der Auflageplatte 3 ist dann z. B. lediglich ein sich nach oben erstreckender Stift oder eine entsprechende Bohrung notwendig, um eine Schraube oder eine andere Fixierungsmöglichkeit vorzusehen.

Eine lösbare Verbindung 31 kann vorteilhaft dazu genutzt werden, um den Pflanzenkübel 200 auszutauschen. Ein Austauschen kann beispielsweise notwendig werden, wenn die Pflanze zu groß wird, der Pflanzenkübel 200 beschädigt ist oder aus anderen Gründen.

**Fig. 9b** zeigt den erfindungsgemäßen Transportroller 100 aus Fig. 9a mit verbundener Deichsel 1. Die Stege 13 wurden in die Taschen 15 eingeführt.

**Fig. 9c** zeigt den erfindungsgemäßen Transportroller 100 aus Fig. 9b mit verbundener Deichsel 1 in einer gekippten Ansicht. Aus Vereinfachungsgründen werden die für den Kippvorgang notwendigen angreifenden Kräfte (siehe Fig. 3a und Fig. 3b) nicht dargestellt.

Aufgrund der Fixierung des Pflanzenkübels 200 an der Auflageplatte 3 kann der Pflanzenkübel 200 nicht von der gekippten Auflageplatte 3 herunterrutschen. Dies kann vorteilhaft sein, wenn der Transportroller 100 beispielsweise über einen unebenen Untergrund bewegt werden muss und mögliche Kanten oder Absätze, beispielsweise in einer Gartenanlage, überwunden werden müssen. Für derartige Hindernisse kann es notwendig sein, den Transportroller 100 zu drehen, zu schieben, zu ziehen, stärker zu neigen, sodass eine stabile Verbindung ein sicheres Bewegen ermöglicht.

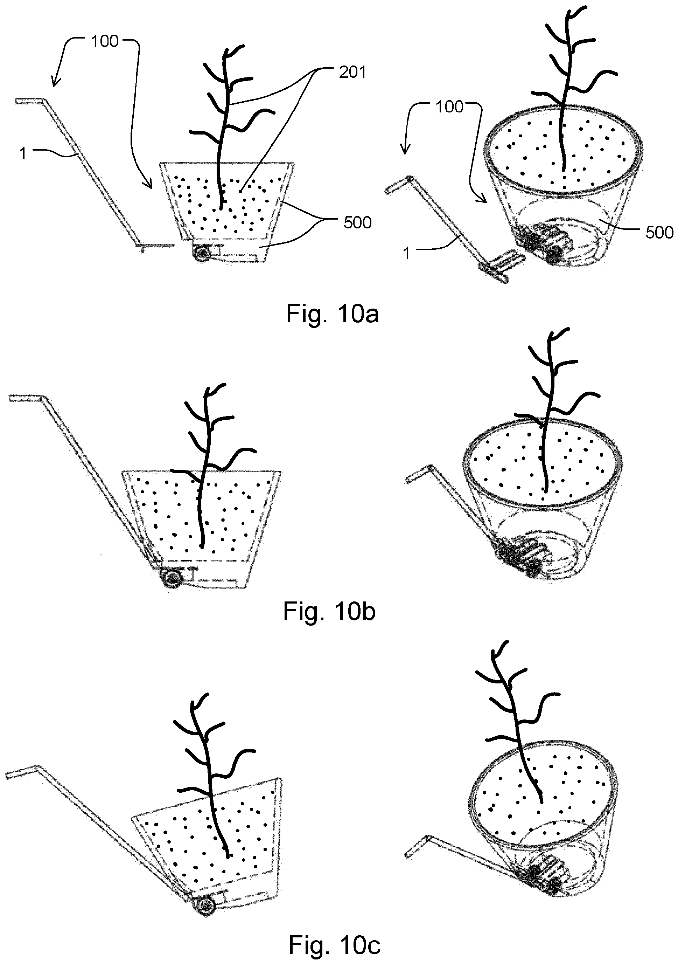

**Fig. 10a** zeigt den erfindungsgemäßen Transportroller 100 in einer weiteren Ausführungsform in integraler Bauweise in einer Seitenansicht (links) und in einer perspektivischen Ansicht (rechts). In dieser integralen, exemplarischen Bauweise sind die Auflageplatte 3 und der Pflanzenkübel 200 zu einem Bauteil zusammengefasst und z. B integral hergestellt. Dieses Bauteil kann als Aufnahmeeinheit 500 oder als fahrbarer Pflanzenkübel 500 bezeichnet werden. Ein fahrbarer Pflanzenkübel 500 kann vorteilhaft einfach und kostengünstig hergestellt werden, beispielsweise in Gussform aus einem faserverstärkten Kunststoff. Die Rollen 5 können nach der Fertigung der Basisform mit entsprechenden Achsen bzw. Achsaufhängungen 9 montiert werden.

**Fig. 10b** zeigt den erfindungsgemäßen Transportroller 100 aus Fig. 10a mit der verbundenen Deichsel 1.

**Fig. 10c** zeigt den erfindungsgemäßen Transportroller 100 aus Fig. 10b mit verbundener Deichsel 1 in gekipptem Zustand. Aufgrund der integralen Bauweise kann der Pflanzkübel nicht von der Auflageplatte rutschen.

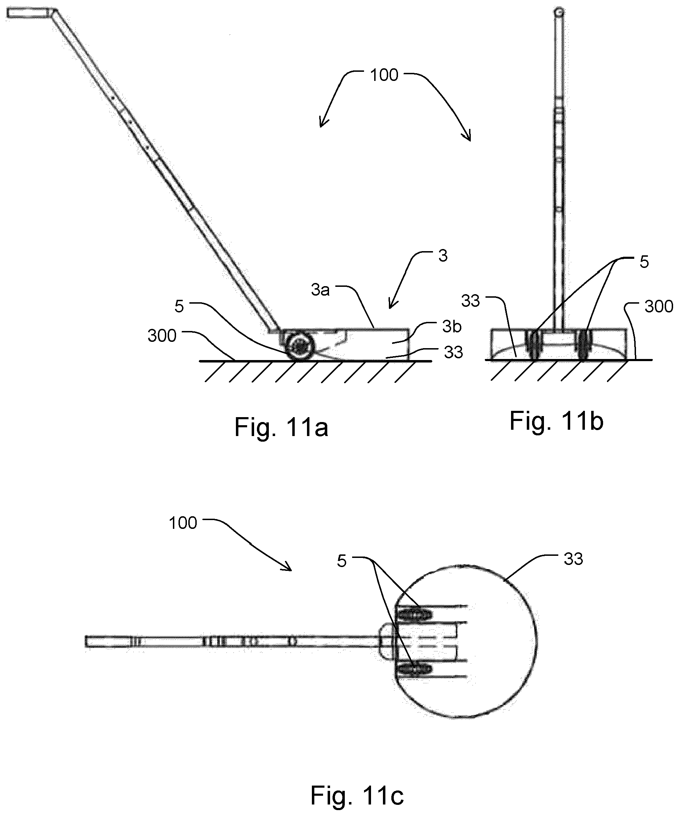

**Fig. 11a** zeigt den erfindungsgemäßen Transportroller 100 in einer weiteren Ausführungsform in einer Seitenansicht. Der Stützfuß 7 ist hier optional in Form einer Stützkante 33 ausgebildet, oder die Stützkante 33 ersetzt den Stützfuß 7. Die Stützkante 33 ist hier beispielhaft ein integraler Abschnitt oder Fortsatz der schalenförmigen Auflageplatte 3, insbesondere deren nachstehend beschriebenen, optionalen Abdeckabschnitts 3b.

Die Auflageplatte 3 weist in dieser Ausführungsform eine Bodenplatte 3a und einen Abdeckabschnitt 3b auf. Bodenplatte 3a und Abdeckabschnitt 3b können im Winkel zueinander stehen, z. B. im Winkel von 90°, z. B. in einem Winkel zwischen 80° und 100°.

Auf die Bodenplatte 3a kann der Pflanzenkübel 200 aufgesetzt werden, wie dies in den Fig. 1 bis 5 dargestellt ist. Der Abdeckabschnitt 3b kann als Umrandung, als Sichtschutz oder als Schürze der Auflageplatte 3 bezeichnet werden. Der Abdeckabschnitt 3b kann beispielsweise mittels einer Lötverbindung mit der Bodenplatte 3a verbunden sein.

Die Stützkante 33 ist optional als Verlängerung des Abdeckabschnitts 3b ausgestaltet, die bis zu einer Aufstellfläche für den Transportroller, z. B. den Boden 300 reicht. Der Boden 300 ist beispielsweise eine Bodenplatte, ein Untergrund oder ein Abstellbereich, auf dem der Pflanzenkübel 200 mit der Auflageplatte 3 abgestellt werden soll. Hierin unterscheidet sich die Ausgestaltung der Fig. 11a von jener der Fig. 6b, da in Letzterer der Stützfuß 7 vorgesehen ist und der Abdeckabschnitt 3b dort nicht bis zum Boden 300 reicht. Der Transportroller 100 wird in der Ausführungsform der Fig. 6b mittels der beiden Rollen 5 und dem Stützfuß 7 auf dem Untergrund abgestützt. Dagegen wird der Transportroller 100 in der exemplarischen Ausführungsform der Fig. 11a mittels der- hier exemplarisch zwei - Rollen 5 und der unteren Abschlusskante der Stützkante 33 auf dem Boden 300 abgestützt.

**Fig. 11b** zeigt den erfindungsgemäßen Transportroller 100 in einer Ansicht von hinten, bezogen auf Fig. 11a von links. In dieser Ansicht ist die untere Abschlusskante der Stützkante 33 auf dem Untergrund zusammen mit den beiden Rollen 5 deutlich in Kontakt mit dem Boden 300 zu erkennen.

**Fig. 11c** zeigt den erfindungsgemäßen Transportroller 100 in einer Ansicht von unten auf die untere Abschlusskante der Stützkante 33 und auf die beiden Räder 5. Zu erkennen ist, dass diese Ausführungsform, wie auch andere Ausführungsformen, keinen Stützfuß 7 benötigt, jedenfalls keinen, welche nicht Teil des Abdeckabschnitts 3b wäre, etwa als Teil der vom Abdeckabschnitt 3b ausgeformten Wandung.

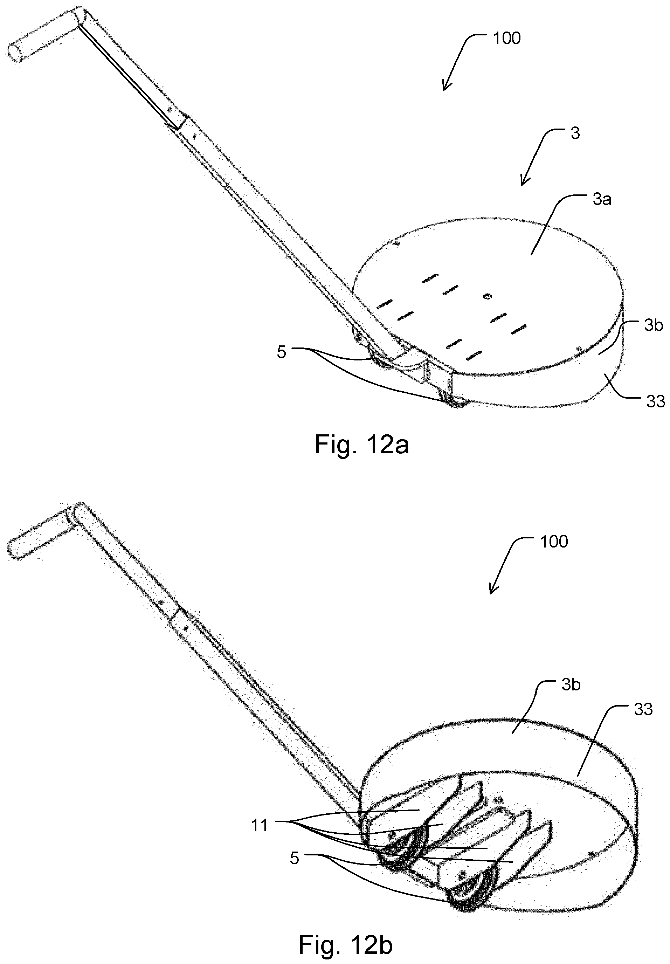

**Fig. 12a** zeigt den erfindungsgemäßen Transportroller 100 der Fig. 11 a -c in einer perspektivischen Ansicht von schräg oben.

Gegenüber der Ausführungsform aus Fig. 6b ist der Abdeckabschnitt 3b um die Stützkante 33 verlängert. Der Stützfuß 7, wie er beispielsweise in den Ausführungsformen der Fig. 6a und Fig. 7 dargestellt ist, ist in dieser Ausführungsform der Fig. 12a und 12b nicht vorgesehen. Seine Funktion hingegen ist in Form der Stützkante 33 realisiert. Dadurch kann vorteilhaft auf die beiden stabförmigen Stützfüße 7 verzichtet werden, die beispielsweise als separate Bauelemente eigens an der Unterseite der Bodenplatte 3a befestigt werden müssten, was zusätzlichen Aufwand bedeutet. Ein weiterer Vorteil mit einer als Stützkante 33 ausgeführten Abstützung des Transportrollers 100 ist das Vermeiden eines Abknickens oder Abbrechens der Stützfüße 7, wie dies beispielsweise durch eine Materialermüdung oder bei einer seitlichen Belastung auf die Stützfüße 7 passieren könnte.

**Fig. 12b** zeigt den erfindungsgemäßen Transportroller 100 der Fig. 11 a -c in einer perspektivischen Ansicht von schräg unten.

In dieser Ansicht sind die Befestigungsplatten 11 deutlich zu erkennen, welche sich unterhalb der Bodenplatte 3a z. B. von dieser erstreckt, und an denen die Achsen der beiden Rollen 5 wie hier befestigt sein können.

**Bezugszeichenliste**

| Bezugszeichen | Beschreibung |
| --- | --- |
| 100 | Transportroller |
| 200 | Gegenstand, Pflanzenkübel |
| 201 | Gegenstand, Blumenerde, Pflanze |
| 300 | Untergrund; Boden |
| 400 | Nutzer |
| 500 | Aufnahmeeinheit; fahrbarer Pflanzenkübel |
| | |

(fortgesetzt)

| Bezugzeichen | Beschreibung |
|---|---|
| F1 | Gewichtskraft des Pflanzenkübels 200 |
| F2, F3 | angreifender Kraftvektor an der Deichsel 1 |
| L1 | Hebelarm zwischen Kipppunkt und Richtung der Gewichtskraft F1 |
| L2 | Hebelarm zwischen Kipppunkt und Richtung von F2, F3 |
| S | Schwerpunkt des Pflanzenkübels 200 |
| | |
| 1 | Deichsel |
| 3 | Auflageplatte |
| 3a | Bodenplatte |
| 3b | Abdeckabschnitt |
| 5 | Rolle |
| 6 | Drehachse |
| 7 | Stützfuß |
| 9 | Achsaufhängung |
| 11 | Befestigungsplatte |
| 13 | Verbindungselement; Steg |
| 15 | Aufnahmeabschnitt; Tasche |
| 17 | erster Endbereich |
| 19 | mittlerer Verbindungsbereich |
| 21 | zweiter Endbereich |
| 23 | Abschlussblech |
| 25 | Angriffspunkt zum Bewegen der Deichsel |
| 27 | Kipppunkt; Drehpunkt |
| 29 | Lötverbindung der Befestigungsplatte mit der Auflageplatte |
| 31 | lösbare Verbindung; Schraubverbindung |
| 33 | Stützkante |

**Patentansprüche**

1. Transportroller (100) zum, insbesondere manuellen, Bewegen und/oder Transportieren von wenigstens einem Gegenstand (200, 201), umfassend

- eine Auflageplatte (3) oder eine Aufnahmeeinheit (500) zum Aufsetzen oder Aufnehmen des Gegenstands (200, 201) hierauf bzw. hierin;
- wenigstens einer, wenigstens zwei oder genau zwei Rollen (5) mit wenigstens einer Drehachse (6), wobei die Rolle(n) (5) und ihre Drehachse (6) unterhalb der Auflageplatte (3) oder unterhalb der Aufnahmeeinheit (500) angeordnet sind; und
- optional wenigstens einen Stützfuß (7), der unterhalb der Auflageplatte (3) oder der Aufnahmeeinheit (500) angeordnet ist, wobei der Stützfuß (7) und die Rollen (5) jeweils zum Abstützen des Transportrollers (100) auf einem Untergrund (300) angeordnet und/oder ausgebildet sind;

wobei die Auflageplatte (3) oder die Aufnahmeeinheit (500) einen Aufnahmeabschnitt (15) zum Einschieben eines Verbindungselements (13) einer Deichsel (1) zum, insbesondere formschlüssigen, Verbinden des Transportrollers (100), insbesondere dessen Auflageplatte (3) oder Aufnahmeeinheit (500), mit der Deichsel (1) oder einem Abschnitt hiervon aufweist.

2. Transportroller (100) nach Anspruch 1, wobei der Aufnahmeabschnitt (15) zumindest abschnittsweise unter der Auflageplatte (3) und/oder innerhalb einer unteren Wandung der Auflageplatte (3) oder der Aufnahmeeinheit (500) angeordnet ist oder sich zumindest abschnittsweise dorthin erstreckt.

3. Transportroller (100) nach Anspruch 1 oder 2, wobei die Rollen (5) zwischen dem Aufnahmeabschnitt (15), oder wenigstens einem Abschnitt hiervon, und der Verbindung des Stützfußes (7) mit der Auflageplatte (3) angeordnet sind.

4. Transportroller (100) nach einem der vorangegangenen Ansprüche, wobei einerseits genau zwei Rollen (5) und andererseits optional genau ein oder genau zwei Stützfüße (7) unterhalb der Auflageplatte (3) oder unterhalb der Aufnahmeeinheit (500) zum Abstützen des Transportrollers (100) auf einem Untergrund (300) angeordnet und/oder ausgebildet sind.

5. Transportroller (100) nach einem der vorangegangenen Ansprüche, wobei der Transportroller (100) eine mit der Auflageplatte (3) oder der Aufnahmeeinheit (500) mittels eines Verbindungselements (13) lösbar verbundene oder verbindbare Deichsel (1) zum Kippen und, insbesondere manuellen, rollenden Bewegen des Transportrollers (100) umfasst oder hiermit, vorzugsweise lösbar, verbunden ist.

6. Transportroller (100) nach einem der vorangegangenen Ansprüche, wobei die Deichsel (1) eine Schubstange oder Zugstange zum manuellen Bewegen des Transportrollers (100) ist.

7. Transportroller (100) nach einem der vorangegangenen Ansprüche, wobei das Verhältnis von einem ersten Hebelarm (L1) zwischen der Drehachse (6) und der Senkrechten eines Schwerpunkts (S) des Gewichts des Transportrollers (100) und dem Gewicht des optional zu transportierenden Gegenstands (200, 201) zu einem zweiten Hebelarm (L2, L3) zwischen dem Kipppunkt (27) und der Senkrechten eines an der Deichsel (1) angreifenden Kraftvektors (F2, F3) wenigstens eins zu vier, insbesondere eins zu sechs, weiter insbesondere eins zu acht beträgt.

8. Deichsel (1), geeignet zu ihrem Verbinden mit einem Transportroller (100), insbesondere nach einem der vorangegangenen Ansprüche, aufweisend wenigstens einen ersten Endbereich (17) zum Verbinden der Deichsel (1) mit der Auflageplatte (3), einen zweiten Endbereich (21) zum Aufbringen einer Kraft (F2, F3) durch einen Nutzer zum Bewegen und/oder zum Führen des Transportrollers (100) sowie einen mittleren Verbindungsbereich (19) umfasst, der zwischen dem ersten Endbereich (17) und dem zweiten Endbereich (21) angeordnet ist.

9. Set, aufweisend

- wenigstens einen Transportroller (100) gemäß einem der Ansprüche 1 bis 7; und
- wenigstens eine Deichsel (1) gemäß Anspruch 8.

Fig. 1

Fig. 2

Fig. 3a

Fig. 3b

Fig. 4

Fig. 5

Fig. 6a

Fig. 6b

Fig. 6c

Fig. 7

Fig. 8

Fig. 9a

Fig. 9b

Fig. 9c

Fig. 10a

Fig. 10b

Fig. 10c

Fig. 11a

Fig. 11b

Fig. 11c

Fig. 12a

Fig. 12b

Europäisches
Patentamt

European
Patent Office

Office européen
des brevets

# EUROPÄISCHER RECHERCHENBERICHT

**Nummer der Anmeldung**

EP 20 17 5485

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 9 045 155 B1 (MINSHULL MARY CATHERINE [US]) 2. Juni 2015 (2015-06-02) * Spalte 5, Zeile 15 - Spalte 6, Zeile 51; Abbildungen 1-7 * ----- | 1-3,5-9 | INV. B62B1/04 B62B5/06 |
| X | DE 78 09 844 U1 (MANSS AUGUST [DE]) 20. Juli 1978 (1978-07-20) * Seite 5 - Seite 7; Abbildungen 1-4 * ----- | 1-9 | |
| X | US 5 246 239 A (BRADEN WILLIS W [US]) 21. September 1993 (1993-09-21) * Spalte 3, Zeile 60 - Spalte 6, Zeile 32; Abbildungen 1-4 * ----- | 1-9 | |

RECHERCHIERTE
SACHGEBIETE (IPC)

B62B

Der vorliegende Recherchenbericht wurde für alle Patentansprüche erstellt

| Recherchenort | Abschlußdatum der Recherche | Prüfer |
|---|---|---|
| München | 1. Oktober 2020 | Wochinz, Reinmar |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................................

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 17 5485

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-10-2020

| Im Recherchenbericht angeführtes Patentdokument | Datum der Veröffentlichung | Mitglied(er) der Patentfamilie | Datum der Veröffentlichung |
|---|---|---|---|
| US 9045155 B1 | 02-06-2015 | KEINE | |
| DE 7809844 U1 | 20-07-1978 | KEINE | |
| US 5246239 A | 21-09-1993 | KEINE | |

EPO FORM P0461

Für nähere Einzelheiten zu diesem Anhang : siehe Amtsblatt des Europäischen Patentamts, Nr.12/82